# EUROPEAN PATENT SPECIFICATION

(11) **EP 2 199 326 B1**
(45) Date of publication and mention of the grant of the patent: **29.10.2014**
(21) Application number: 09178459.5
(22) Date of filing: 09.12.2009
(51) Int. Cl.: C08K 3/26, C08L 15/00, C08L 9/02, C08L 13/00, C08K 5/3447, C08K 5/3475

(54) **Vulcanizable polymer compositions**
Vulkanisierbare Polymerzusammensetzungen
Compositions de polymère vulcanisable

(30) Priority: 19.12.2008 EP 08022135
(43) Date of publication of application: 23.06.2010
(73) Proprietor: LANXESS Deutschland GmbH, 50569 Köln (DE)
(72) Inventor: Soddemann, Matthias, 51503 Rösrath (DE); Ong, Christopher, Orange Texas, TX 77632 (US); Brandau, Sven, 41542 Dormagen (DE)

(56) References cited:
- EP-A1- 0 940 429
- EP-A1- 1 964 882
- EP-A2- 0 943 657

## Description

The present invention relates to a vulcanizable polymer composition, a polymer vulcanizate obtained from such polymer composition and to a process for the production thereof.

The negative effects of oxidizing conditions on vulcanizates obtained from polymers having carbon-carbon double bond unsaturation have long been a problem, particularly in applications where the vulcanizates are exposed to elevated temperatures for extended periods of time. A variety of approaches have been developed in the art in an attempt to solve this problem.

It is known that the carbon-carbon double bonds of such polymers activate the vulcanizate to oxidative attack. One solution to the problem of oxidative attack is to use polymers with few or no carbon-carbon double bonds. Examples of such polymers include butyl rubber (copolymers of isobutylene and isoprene) which typically contain only from about 0.5 to about 3.0 mole percent of carbon-carbon double bond unsaturation, and ethylene-propylene copolymers which contain no such unsaturation.

Certain applications, such as the various hoses and seals in the engine compartment of automobiles, require vulcanized polymers with a combination of oil resistance, and resistance to oxidative attack in air at elevated temperatures for extended periods of time. Vulcanizates of copolymers of conjugated dienes and α,β-unsaturated nitriles, such as acrylonitrile-butadiene copolymers, commonly known as "nitrile rubbers" or "NBR", are well known for their oil resistance. However, they contain carbon-carbon double bond unsaturation and therefore are susceptible to oxidative attack unless subjected to special compounding procedures for the production of oxidation resistant vulcanizates.

In order to reduce the amount of carbon-carbon double bond unsaturation in NBR and yet retain the copolymer's oil resistance which is thought to be provided by the nitrile functional groups in the copolymer, methods have been developed to selectively hydrogenate the carbon-carbon double bond unsaturation of NBR without hydrogenating the nitrile groups to produce hydrogenated NBR or HNBR. See for example, GB-A-1,558,491. A further review by Tan et al. Rubber Chem. Tech. (2005), 78(3), 489-515 gives a comprehensive overview of this technical field.

While the development of HNBR represents a significant advance in the art, there is still room for improvement.

In US-A-6,214,922 it is disclosed that the usage of a combination of antioxidants together with bases significantly improves the hot air ageing characteristics of hydrogenated nitrile vulcanizates. One preferred combination includes the usage of sodium carbonate which provides good results.

In US 2002/072557 A1 it is further disclosed to use anti-aging agents for organic polymers based on salts of sterically hindered phenolic compounds with at least two phenolic OH groups.

In WO-A-2007/072900 it has been shown that compression set values of a nitrile rubber may be improved by using an aromatic secondary amine antiaging agent and a polyamine crosslinking agent together with a nitrile rubber containing α,β-ethylenically unsaturated dicarboxylic acid monoester monomer units.

EP0943657 discloses a polymer composition comprising an aliphatic unsaturated dicarboxylic acid monoalkyl ester-copolymerized acrylic elastomer, a diamine vulcanizing agent and a polycyclic aminic base can be used as vulcanization accelerator.

EP0940429 discloses a vulcanizable polymer composition having improved hot air aging properties comprising a nitrile rubber.

In JP 2008-056793 A a crosslinkable nitrile rubber composition having an improved tensile stress and scorching stability is disclosed which contains a crosslinking agent and a highly saturated nitrile rubber having α,β-ethylenically unsaturated nitrile monomeric repeating units and, α ,β-ethylenically unsaturated dicarboxylic acid monoester monomeric units having one carboxyl group on each of the two carbon atoms forming the α,β-ethylenically unsaturated bond, and wherein the time tc(90) corresponding to 90 % vulcanization is at least five minutes. The α,β-ethylenically unsaturated dicarboxylic acid monoester monomer is preferably a maleic acid mono n-butyl ester monomeric unit or a fumaric acid mono-n-butyl ester unit. As crosslinking agent contained in the crosslinkable nitrile rubber compositions polyamine compounds are preferred. The compositions may additionally contain a crosslinking promoter. DOTG (Di-o-tolyl guanidin) is the only crosslinking promoter mentioned.

EP 1 234 851 A1 discloses a crosslinkable rubber composition comprising a nitrile group-containing highly saturated copolymer rubber containing repeating units of an ethylenically unsaturated dicarboxylic acid monalkyl ester monomer, a polyamine crosslinking agent, and a basic crosslinking accelerator being a guanidine crosslinking accelerator such as tetramethylguanidine, tetraethylguanidine, diphenylguanidine, d-o-tolylguanidine, o-tolylbiguanidine and a di-o-tolylguadinine salt of dicathecolboric acid; or aldehydeamine crosslinking accelerators such as n-butylaldehydeaniline, acetaldehydeammonnia and hexamethylenetetramine. Of these, guanidine crosslinking accelerators are preferred. According to all examples in EP 1 234 851 A1 DOTG is used as crosslinking accelerator.

The latter two references show, that even though the vulcanizates mentioned in the prior art are very useful for obtaining improved long term compression set values, however, in order to achieve an optimized crosslinking reaction a strong organic base as e.g. 3-di-o-tolyl guanidine (DOTG) is needed.

However, DOTG is toxic and this represents a substantial problem and disadvantage for the use of a curing system containing this crosslinking accelerator. In particular the use of DOTG is restricted for few and very specific applications.

In a still unpublished patent application a new advantageous vulcanizable polymer composition has been described which does not require anymore the use of toxic components and in particular no toxic cross-linking accelerators. Instead, specific other cross-linking accelerators are successfully used. The polymer vulcanizates prepared on the basis of such polymer compositions show very good physical properties such as hot air ageing and a favourable compression set and simultaneously have the lower toxicity.

In a further unpublished patent application it has been found by ourselves that the use of certain alkali metal salts in vulcanizable polymer compositions results in favourable hot air ageing characteristics of the respective polymer vulcanizates with at the same time an improved swelling resistance to polar media.

While these developments already represent a significant advance in the art, there is still room for improvement. As it is most important to have a well balanced set of mechanical, physical and chemical properties of any polymer vulcanizates it was the object of the present invention to further improve the long-term properties of polymer vulcanizates on the basis of unsaturated polymers, like hot air ageing properties and compression set without losing the excellent vulcanization profile and cure rates already accessible in the prior art.

These objects have now been solved by providing a novel vulcanizable polymer composition wherein besides the polymer component a combination of a polyamine crosslinking agent, a specific crosslinking accelerator containing at least one bi- or polycyclic aminic base, and an alkali metal salt is used.

Accordingly, the present invention provides a vulcanizable polymer composition comprising
(i) a polymer having a main polymer chain with repeating units derived from
   (ia) at least 25 % by weight to 100% by weight, preferably 25 to 85% by weight, more preferably 30 to 80% by weight, and particularly preferably 45 to 75% by weight, based on the polymer, of a **first monomer** which introduces at least one of a secondary carbon and a tertiary carbon to the main polymer chain, preferably at least one diene monomer,
   (ib) in the range of from 0 to 74.9 % by weight, preferably 10 to 60% by weight, more preferably 15 to 55% by weight, particularly preferably 20 to 50% by weight, based on the polymer, of at least a **second monomer**, preferably an α,β-ethylenically unsaturated nitrile monomer, and
   (ic) in the range of from 0.1 to 20% by weight, preferably 0.5 to 20% by weight, more preferably 1 to 15% by weight, particularly preferably 1.5 to 10% by weight based on the polymer of at least one α,β-ethylenically unsaturated dicarboxylic acid monoester monomer, α,β-ethylenically unsaturated dicarboxylic acid monomer, α,β-ethylenically unsaturated dicarboxylic acid anhydride monomer or α,β-ethylenically unsaturated dicarboxylic acid diester as a **third monomer,**
   wherein the sum of all monomer repeating units mentioned under (ia), (ib) and (ic) is 100% by weight;
(ii) at least one polyamine crosslinking agent,
(iii) at least one bi- or polycyclic aminic base, and
(iv) at least one alkali metal salt.

In a further embodiment the present invention provides a vulcanizable polymer composition comprising
(i) a polymer having a main polymer chain derived from
   (ia) at least 25 % by weight to 99.9% by weight, preferably 25 to 89.5% by weight based on the polymer, of a **first monomer** which introduces at least one of a secondary carbon and a tertiary carbon to the main polymer chain, preferably at least one diene monomer, and
   (ib) in the range of from 0 to 74.9 % by weight, preferably 10 to 60% by weight based on the polymer, of at least a **second monomer**, preferably an α,β-ethylenically unsaturated nitrile monomer;
   (ic) in the range of from 0.1 to 20% by weight, preferably 0.5 to 20% by weight based on the polymer, of at least one α,β-ethylenically unsaturated dicarboxylic acid monoester monomer, α,β-ethylenically unsaturated dicarboxylic acid monomer, α ,β-ethylenically unsaturated dicarboxylic acid anhydride monomer or α,β-ethylenically unsaturated dicarboxylic acid diester as a **third monomer,**
   wherein the sum of all monomer units mentioned under (ia), (ib) and (ic) is 100% by
   weight;
(ii) at least one polyamine crosslinking agent,
(iii) at least one bi- or polycyclic aminic base and
(iv) at least one alkali metal salt.

In a **preferred embodiment** the present invention provides a vulcanizable polymer composition comprising:
(i) a polymer having a main polymer chain with repeating units derived from
   (ia) at least 25 % by weight to 100% by weight, preferably 25 to 85% by weight, more preferably 30 to 80% by weight, particularly preferably 45 to 75% by weight, based on the polymer, of a **first monomer** which introduces at least one of a secondary carbon and a tertiary carbon to the main polymer chain, preferably at least one diene monomer, and
   (ib) in the range of from 0 to 74.9 % by weight, preferably 10 to 60% by weight, more preferably 15 to 55% by weight, particularly preferably 20 to 50% by weight, based on the polymer, of at least a **second monomer**, preferably an α,β-ethylenically unsaturated nitrile monomer;
   (ic) in the range from 0.1 to 20% by weight, preferably 0.5 to 20% by weight, more preferably 1 to 15% by weight, particularly preferably 1.5 to 10% by weight of at least one α,β-ethylenically unsaturated dicarboxylic acid monoester monomer, α ,β-ethylenically unsaturated dicarboxylic acid monomer, α,β-ethylenically unsaturated dicarboxylic acid anhydride monomer or α,β-ethylenically unsaturated dicarboxylic acid diester as a **third monomer,**
   wherein the sum of all monomer repeating units mentioned under (ia), (ib) and (ic) is 100%
   by weight,
(ii) at least one polyamine crosslinking agent,
(iii) at least one bi- or polycyclic aminic base which is selected from the group consisting of 1,8-diazabicyclo[5.4.0]undec-7-ene (DBU), 1,5-diazabicyclo[4.3.0]-5-nonene (DBN), 1,4-diazabicyclo[2.2.2]octane (DABCO) 1,5,7-triazabicyclo[4.4.0]dec-5-ene (TBD), 7-methyl-1,5,7-triazabicyclo[4.4.0]dec-5-ene (MTBD) and its derivatives, and
(iv) at least one alkali metal salt, preferably a lithium or sodium salt, more preferably lithium or sodium carbonate.

In a further **preferred embodiment** the present invention provides a polymer composition comprising:
(i) a polymer having a main polymer chain derived from
   (ia) at least 25 % by weight to 99.9% by weight, preferably 25 to 89.5% by weight based on the polymer, of a **first monomer** which introduces at least one of a secondary carbon and a tertiary carbon to the main polymer chain, preferably at least one diene monomer, and
   (ib) in the range of from 0 to 74.9 % by weight, preferably 10 to 60 % by weight based on the polymer, of at least a **second monomer**, preferably an α,β-ethylenically unsaturated nitrile monomer;
   (ic) in the range from 0.1 to 20% by weight, preferably 0.5 to 20 % by weight based on the polymer of at least one α,β-ethylenically unsaturated dicarboxylic acid monoester monomer, α,β-ethylenically unsaturated dicarboxylic acid monomer, α,β-ethylenically unsaturated dicarboxylic acid anhydride monomer or α,β-ethylenically unsaturated dicarboxylic acid diester as a **third monomer,**
   wherein the sum of all monomer units mentioned under (ia), (ib) and (ic) is 100% by
   weight;
(ii) at least one polyamine crosslinking agent,
(iii) at least one bi- or polycyclic aminic base which is selected from the group consisting of 1,8-diazabicyclo[5.4.0]undec-7-ene (DBU), 1,5-diazabicyclo[4.3.0]-5-nonene (DBN), 1,4-diazabicyclo[2.2.2]octane (DABCO) 1,5,7-triazabicyclo[4.4.0]dec-5-ene (TBD), 7-methyl-1,5,7-triazabicyclo[4.4.0]dec-5-ene (MTBD) and its derivatives and
(iv) at least one alkali metal salt, preferably a lithium or sodium salt, more preferably lithium or sodium carbonate.

Optionally the polymer compositions according to the invention additionally comprise at least one antioxidant as component (v) and at least one filler as component (vi).

A particularly preferred polymer composition according to the present invention comprises:
(i) an optionally hydrogenated nitrile polymer derived from
   (ia) at least one conjugated diene,
   (ib) at least one α,β-unsaturated nitrile, and
   (ic) at least one α,β-ethylenically unsaturated dicarboxylic acid monoester monomer, α ,β-ethylenically unsaturated dicarboxylic acid monomer, α,β-ethylenically unsaturated dicarboxylic acid anhydride monomer or α,β-ethylenically unsaturated dicarboxylic acid diester as third monomer,
(ii) at least one polyamine crosslinking agent,
(iii) at least one bi- or polycyclic aminic base, which is in particular selected from the group consisting of 1,8-diazabicyclo[5.4.0]undec-7-ene (DBU), 1,5-diazabicyclo[4.3.0]-5-nonene (DBN), 1,4-diazabicyclo[2.2.2]octane (DABCO) 1,5,7-triazabicyclo[4.4.0]dec-5-ene (TBD), 7-methyl-1,5,7-triazabicyclo[4.4.0]dec-5-ene (MTBD) and its derivatives,
(iv) lithium carbonate,
(v) optionally at least one antioxidant, and
(vi) optionally at least one filler.

A further particularly preferred polymer composition according to the present invention comprises:
(i) an optionally hydrogenated nitrile polymer derived from
   (ia) at least one conjugated diene,
   (ib) at least one α,β-unsaturated nitrile, and
   (ic) at least one α,β-ethylenically unsaturated dicarboxylic acid monoester monomer, α ,β-ethylenically unsaturated dicarboxylic acid monomer, α,β-ethylenically unsaturated dicarboxylic acid anhydride monomer or α,β-ethylenically unsaturated dicarboxylic acid diester as third monomer,
(ii) at least one polyamine crosslinking agent,
(iii) at least one bi- or polycyclic aminic base, which is in particular selected from the group consisting of 1,8-diazabicyclo[5.4.0]undec-7-ene (DBU), 1,5-diazabicyclo[4.3.0]-5-nonene (DBN), 1,4-diazabicyclo[2.2.2]octane (DABCO) 1,5,7-triazabicyclo[4.4.0]dec-5-ene (TBD), 7-methyl-1,5,7-triazabicyclo[4.4.0]dec-5-ene (MTBD) and its derivatives,
(iv) sodium carbonate,
(v) optionally at least one antioxidant, and
(vi) optionally at least one filler.

A further particularly preferred polymer composition according to the present invention comprises:
(i) an optionally hydrogenated nitrile polymer derived from
   (ia) at least one conjugated diene,
   (ib) at least one α,β-unsaturated nitrile, and
   (ic) at least one α,β-ethylenically unsaturated dicarboxylic acid monoester monomer as third monomer,
(ii) at least one polyamine crosslinking agent,
(iii) at least one bi- or polycyclic aminic base, which is in particular selected from the group consisting of 1,8-diazabicyclo[5.4.0]undec-7-ene (DBU), 1,5-diazabicyclo[4.3.0]-5-nonene (DBN), 1,4-diazabicyclo[2.2.2]octane (DABCO) 1,5,7-triazabicyclo[4.4.0]dec-5-ene (TBD), 7-methyl-1,5,7-triazabicyclo[4.4.0]dec-5-ene (MTBD) and its derivatives,
(iv) sodium carbonate,
(v) optionally at least one antioxidant, and
(vi) optionally at least one filler.

The novel vulcanizable polymer composition disposes of a very balanced property profile and numerous advantages, in particular of having a substantially reduced toxicity due to the use of a bi-or polycyclic aminic base as crosslinking accelerator and simultaneously having improved long-term hot air ageing, compression set and hardness properties.

It is yet another object of the present invention to provide a method for vulcanizing such vulcanizable polymer compositions to obtain novel polymer vulcanizates.

Choosing this specific combination of at least one polyamine crosslinking agent, at least one bi- or polycyclic aminic base and at least one alkali metal salt in combination with the polymer (i) allows to provide a novel method for assuring an excellent curing process of such polymer compositions and at the same time obtaining polymer vulcanizates with advantageous characteristics. On the one hand the polymer vulcanizates dispose of a lowered toxicity due to the use of the less toxic crosslinking accelerator, too, and on the other hand they show improved physical and mechanical properties at room temperature like improved moduli 10, 25, 50, and 100 as well as improved long-term hot air aging characteristics, like a smaller loss in the elongation at break and tensile strength properties upon ageing as well as a smaller increase of the compression set upon ageing.

Thus, it has been discovered that the above mentioned advantages are in particular obtained by incorporating a particular combination of a bi- or polycyclic aminic base, preferably selected from the group consisting of 1,8-Diazabicyclo[5.4.0]undec-7-en (DBU), 1,5-Diazabicyclo[4.3.0]-5-nonen (DBN), 1,4-Diazabicyclo[2.2.2]octan (DABCO), 1,5,7-triazabicyclo[4.4.0]dec-5-ene (TPD), 7-methyl-1,5,7-triazabicyclo[4.4.0]dec-5-ene (MTPD) and its derivatives, a polyamine crosslinking agent and either lithium carbonate, sodium carbonate or potassium carbonate into a polymer. The present vulcanizates may also be characterized by improvement (i.e., in comparison to a vulcanizate produced according to the prior art , i.e. without the alkali metal salt or without the specific bi- or polycyclic aminic base) in one or more of the following properties: aged hot air aging, aged hot fluid aging, aged compression set, aged dynamic elastic modulus (E'), aged dynamic viscous modulus (E"), aged static modulus, aged low temperature properties, aged hardness and toxicology.

### Vulcanizable polymer compositions:

### First component (i):

The first component (i) of the present polymer composition is a polymer having a main polymer chain with monomer repeating units derived from:
(ia) at least 25% by weight to 100% by weight, preferably 25 to 85% by weight, more preferably 30 to 80% by weight, particularly preferably 45 to 75% by weight, based on the polymer, of a **first monomer** which introduces at least one of a secondary carbon and a tertiary carbon to the main polymer chain, preferably at least one diene monomer, and
(ib) in the range of from 0 % to 74.9 % by weight, preferably 10 to 60% by weight, more preferably 15 to 55% by weight, particularly preferably 20 to 50% by weight, based on the polymer, of at least a **second monomer**, preferably an α ,β-ethylenically unsaturated nitrile monomer;
(ic) in the range from 0.1 to 20% by weight, preferably 0.5 to 20% by weight, more preferably 1 to 15% by weight, particularly preferably 1.5 to 10% by weight of at least an α,β-ethylenically unsaturated dicarboxylic acid monoester monomer, α ,β-ethylenically unsaturated dicarboxylic acid monomer, α,β-ethylenically unsaturated dicarboxylic acid anhydride monomer or α,β-ethylenically unsaturated dicarboxylic acid diester as a third monomer, preferably at least one α ,β-ethylenically unsaturated dicarboxylic acid monoester monomer,
wherein the sum of all monomer repeating units mentioned under (ia), (ib) and (ic) is 100% by weight;

In a further embodiment the first component (i) of the present polymer composition is a polymer having a main polymer chain derived from:
(ia) at least 25% by weight to 99.9% by weight, preferably 25 to 89.5 % by weight based on the polymer, of a **first monomer** which introduces at least one of a secondary carbon and a tertiary carbon to the main polymer chain, preferably at least one diene monomer, and
(ib) in the range of from 0 % to 74.9 % by weight, preferably 10 to 60 % by weight based on the polymer, of at least a **second monomer**, preferably an α ,β-ethylenically unsaturated nitrile monomer;
(ic) in the range from 0.1 to 20% by weight, preferably 0.5 to 20 % by weight based on the polymer, of at least an α,β-ethylenically unsaturated dicarboxylic acid monoester monomer, α,β-ethylenically unsaturated dicarboxylic acid monomer, α,β-ethylenically unsaturated dicarboxylic acid anhydride monomer or α ,β-ethylenically unsaturated dicarboxylic acid diester as a **third monomer**, preferably at least one α,β-ethylenically unsaturated dicarboxylic acid monoester monomer,
wherein the sum of all monomer units mentioned under (ia), (ib) and (ic) is 100% by weight;

As used throughout this specification, the term "polymer" with regard to polymer (i) is intended to have a broad meaning and is meant to encompass any polymer as long as it is derived from the above mentioned monomer types (ia) and (ic). In one embodiment of the present invention the first component (i) is a polymer which is derived from the above three mentioned monomer types (ia), (ib) and (ic) and therefore represents a terpolymer.

The first monomer (ia) gives rise to a main polymer chain which comprises at least one secondary or tertiary carbon in the respective repeating units of the main polymer chain. Those skilled in the art understand that a secondary carbon is a carbon atom having two hydrogen atoms bonded to it while a tertiary carbon is a carbon atom having one hydrogen atom bonded to it.

In an alternative embodiment of the present invention it is also possible to use a mixture of polymers provided at least one polymer in the mixture complies with the definition given above.

The polymer suitable for use herein may be an elastomer (e.g. a hydrocarbon rubber), a graft polymer or block polymer derived from monomers (ia) and (ic) each having at least one ethylenically unsaturated bond and polymerizable through this unsaturation.

In the first component of polymer (i) the monomer units (ia) may be formed from an α-olefin monomer which is preferably an α-olefin of a carbon number in the range of from 2 to 12, preferably ethylene, propylene, 1-butene, 4-methyl-1-pentene, 1-hexene, and 1-octene.

Preferably, the polymer (i) used in the present vulcanizable polymer composition is an elastomer.

Elastomers are well known to those of skilled in the art. Non-limiting examples of elastomers which represent a suitable basis for polymer (i) may be derived from natural rubber (NR), cis-1,4-polyisoprene rubber (IR), polybutadiene rubber (BR), styrene-butadiene rubber (SBR), ethylene-propylene monomer rubber (EPM), ethylene-propylene-diene monomer rubber (EPDM), ethylene-vinyl acetate rubber (EVM), epichloro hydrin rubber (ECO), however, always under the proviso that the aforementioned elastomer types have been modified as to contain also repeating units of monomer unit (ic). Again under such proviso, and subject to compatibility, of course, mixtures of two or more of any of the foregoing elastomers may be used herein. More preferably, the elastomer is selected from the group consisting of an ethylene-propylene copolymer, ethylene-propylene-non conjugated diene terpolymer, ethylene-vinyl acetate copolymer, styrene/conjugated diene copolymer, hydrogenated styrene/conjugated diene copolymer, polyisoprene, natural rubber, polybutadiene and mixtures thereof, once more only under the proviso that the aforementioned elastomer types have been modified as to contain also repeating units of monomer unit (ic).

### Nitrile rubber and hydrogenated nitrile rubber as first component (i)

In an alternative embodiment an elastomer can be used as polymer (i) which represents a nitrile rubber or a hydrogenated nitrile rubber. As used throughout this specification, the term "nitrile rubber" as well as "hydrogenated nitrile rubber" is intended to have a broad meaning and is meant to encompass a optionally hydrogenated terpolymer comprising repeating units of at least one diene, either conjugated or not conjugated (as first monomer (ia)), at least one α,β-unsaturated nitrile (as second monomer (ib)) and at least one α,β-ethylenically unsaturated dicarboxylic acid monoester monomer, α,β-ethylenically unsaturated dicarboxylic acid monomer, α,β-ethylenically unsaturated dicarboxylic acid anhydride monomer or α,β-ethylenically unsaturated dicarboxylic acid diester as a third monomer (ic). Additionally the optionally hydrogenated nitrile rubber may further contain one or more other copolymerisable monomers.

As the diene monomer serving as diene monomer unit (ia) a conjugated diene with a carbon number of at least 4 or preferably 4 to 6 carbon atoms may be used. Suitable conjugated dienes are e.g. 1,3-butadiene, isoprene, 2,3-dimethyl-1,3-butadiene, and 1,3-pentadiene; Suitable non-conjugated dienes typically have a carbon number in the range of from 5 to 12, preferably 1,4-pentadiene and 1,4-hexadiene may be used. Among these, a conjugated diene is preferred, and 1,3-butadiene is even more preferred.

The α,β-ethylenically unsaturated nitrile forming the second monomer (ib) of the nitrile rubber is not restricted as long as the said monomer is an α,β-ethylenically unsaturated compound containing a nitrile group. As such compounds, acrylonitrile, α-haloacrylonitriles such as α-chloro acrylonitrile and α-bromo acrylonitrile are suited; α-alkyl acrylonitriles such as methacrylonitrile or ethacrylonitrile may also be used. Among these, acrylonitrile and methacrylonitrile are preferred. A plurality of species of α,β-ethylenically unsaturated nitrile may be used together.

The content of α,β-ethylenically unsaturated nitrile monomer unist in such optionally hydrogenated nitrile rubber is typically in the range of from 10 to 60 wt.%, more preferably in the range of from 15 to 55 wt.% and particularly preferably in the range of from 20 to 50 wt.% with respect to 100 wt.% of all monomer units. If the content of α,β-ethylenically unsaturated nitrile monomer unit is chosen in the lower range, the oil resistance of the obtained rubber crosslinked material is decreasing, and conversely if the content is chosen in the higher ranges, the cold resistance may be depressed.

In addition to the conjugated diene monomer units and the α,β-ethylenically unsaturated nitrile monomer units the optionally hydrogenated nitrile rubber must further contain at least one α ,β-ethylenically unsaturated dicarboxylic acid monoester monomer, α,β-ethylenically unsaturated dicarboxylic acid monomer, α,β-ethylenically unsaturated dicarboxylic acid anhydride monomer or α ,β-ethylenically unsaturated dicarboxylic acid diester as a third monomer (ic).

As third monomer units (ic) α,β-ethylenically unsaturated dicarboxylic acid monoester monomer units are preferred. The tensile strength of the polymer vulcanizates obtained after crosslinking the polymer compositions according to the present invention tends to show an improvement as a result of using a nitrile rubber (i) whose structure contains α,β-ethylenically unsaturated dicarboxylic acid monoester monomer units (ic).

In the preferred process for introducing the monomer units (ic) and in particular α,β-ethylenically unsaturated dicarboxylic acid monoester monomer units into the nitrile rubber (i) monomer units (ic), and in particular the α,β-ethylenically unsaturated dicarboxylic acid monoester, is copolymerized with the aforesaid α,β-ethylenically unsaturated nitrile and the conjugated diene.

As the organic group of the α,β-ethylenically unsaturated dicarboxylic acid monoester monomer and the α,β-ethylenically unsaturated dicarboxylic acid diester monomer which is in each case bonded to the carbonyl group via an oxygen atom, an alkyl group, cycloalkyl group, alkyl cycloalkyl group or aryl group may be present, and among these an alkyl group is preferred. The carbon number of the alkyl group is typically in the range of from 1 to 10, preferably it is 2, 3, 4, 5 to 6. The carbon number of the cycloalkyl group is typically in the range of from 5 to 12, preferably in the range of from 6 to 10. The carbon number of the alkyl cycloalkyl group is preferably in the range of from 6 to 12, and more preferably in the range of from 7 to 10. If the carbon number of the organic group is too small, this might influence the processing stability of the obtained rubber composition, and conversely if too high, a slowing in the crosslinking rate and lowered crosslinked material mechanical strength may result.

Examples of the α,β**-ethylenically unsaturated dicarboxylic acid monoester** monomer include
- maleic acid monoalkyl esters, preferably monomethyl maleate, monoethyl maleate, monopropyl maleate, and mono n-butyl maleate;
- maleic acid monocycloalkyl esters, preferably monocyclopentyl maleate, monocyclohexyl maleate, and monocycloheptyl maleate;
- maleic acid monoalkylcycloalkyl esters, preferably monomethylcyclopentyl maleate, and monoethylcyclohexyl maleate;
- maleic acid monoaryl ester, preferably monophenyl maleate;
- maleic acid mono benzyl ester, preferably monobenzyl maleate;
- fumaric acid monoalkyl esters, preferably monomethyl fumarate, monoethyl fumarate, monopropyl fumarate, and mono n-butyl fumarate;
- fumaric acid monocycloalkyl esters, preferably monocyclopentyl fumarate, monocyclohexyl fumarate, and monocycloheptyl fumarate;
- fumaric acid monoalkylcycloalkyl esters, preferably monomethylcyclopentyl fumarate, and monoethylcyclohexyl fumarate;
- fumaric acid monoaryl ester, preferably monophenyl fumarate;
- fumaric acid mono benzyl ester, preferably monobenzyl fumarate;
- citraconic acid monoalkyl esters, preferably monomethyl citraconate, monoethyl citraconate, monopropyl citraconate, and mono n-butyl citraconate;
- citraconic acid monocycloalkyl esters, preferably monocyclopentyl citraconate, monocyclohexyl citraconate, and monocycloheptyl citraconate;
- citraconic acid monoalkylcycloalkyl esters, preferably monomethylcyclopentyl citraconate, and monoethylcyclohexyl citraconate;
- citraconic acid mono aryl ester, preferably monophenyl citraconate;
- citraconic acid mono benzyl ester, preferably monobenzyl citraconate;
- itaconic acid mono alkyl esters, preferably monomethyl itaconate, monoethyl itaconate, monopropyl itaconate, and mono n-butyl itaconate;
- itaconic acid monocycloalkyl esters, preferably monocyclopentyl itaconate, monocyclohexyl itaconate, and monocycloheptyl itaconate;
- itaconic acid monoalkylcycloalkyl esters, preferably monomethylcyclopentyl itaconate, and monoethylcyclohexyl itaconate;
- itaconic acid mono aryl ester, preferably monophenyl itaconate;
- itaconic acid mono benzyl ester, preferably monobenzyl itaconate;
- mesaconic acid monoalkyl ester, prefereably mesaconic monoethyl ester

As α,β**-ethylenically unsaturated dicarboxylic acid diester monomers** the analogous diesters based on the above explicitely mentioned mono ester monomers may be used, wherein, however, the two organic groups linked to the C=O group via the oxygen atom may be identical or different.

Among these, from the point of having a lowering action on the compound Mooney viscosity (ML 1+4@100°C) of the vulcanizable polymer composition, monoesters (mono alkyl ester, mono cycloalkyl ester and mono alkyl cycloalkyl ester) of dicarboxylic acid having carboxyl groups at each of the two carbon atoms forming the α.β-ethylenically unsaturated bond such as maleic acid, fumaric acid, citraconic acid and the like are preferred, and monoesters of maleic acid and fumaric acid are particularly preferred.

As α,β**-ethylenically unsaturated dicarboxylic acid monomers** maleic acid, fumaric acid, itaconic acid, citraconic acid and mesaconic acid may be used.

As α,β**-ethylenically unsaturated dicarboxylic acid anhydride monomers** the anhydrides of the aforementioned maleic acid, fumaric acid, itaconic acid, and citraconic acid may be used.

The content of α,β-ethylenically unsaturated dicarboxylic acid monoester monomer unit as preferred third monomer (ic) in the nitrile rubber or hydrogenated nitrile rubber is preferably in the range of from 0.5 to 20 wt.%, more preferably in the range of from 1 to 15 wt.%, and particularly preferably in the range of from 1.5 to 10 wt.% with respect to 100 wt.% of all monomer units. If the content of α,β-ethylenically unsaturated dicarboxylic acid monoester monomer units in the nitrile rubber or the hydrogenated nitrile rubber is too small, this may influence the degree of crosslinking of the vulcanizable polymer composition. On the other hand, if the content is too high, this might influence the fatigue properties of the obtained polymer vulcanizate and might result in residual carboxyl groups remaining after the crosslinking.

### Further copolymerisable monomers in the optionally hydrogenated nitrile rubbers:

The optionally hydrogenated nitrile rubber may contain repeating units of other monomer units than those (ia), (ib) and (ic) which can be copolymerised with the various aforesaid monomer units, namely and in particular with the diene monomer, the α,β-ethylenically unsaturated nitrile monomer, the α,β-ethylenically unsaturated dicarboxylic acid monoester monomer. As such other monomers, α,β-ethylenically unsaturated carboxylate esters (other than α,β-ethylenically unsaturated dicarboxylic acid monoester), aromatic vinyl, fluorine-containing vinyl, α ,β-ethylenically unsaturated monocarboxylic acid, and copolymerisable antiaging agent may be used.

As additional α,β-ethylenically unsaturated carboxylate ester monomers (other than α ,β-ethylenically unsaturated dicarboxylic acid monoester), for example, alkyl acrylate ester and alkyl methacrylate ester in which the carbon number of the alkyl group is 1-18 such as methyl acrylate, ethyl acrylate, propyl acrylate, butyl acrylate, n-butyl acrylate, n-dodecyl acrylate, methyl methacrylate, ethyl methacrylate and the like; alkoxyalkyl acrylate and alkoxyalkyl methacrylate in which the carbon number of the alkoxyalkyl is 2-12 such as methoxymethyl acrylate, methoxyethyl methacrylate and the like; cyanoalkyl acrylate and cyanoalkyl methacrylate in which the carbon number of the cyanoalkyl group is 2-12 such as α-acyanoethyl acrylate, β-cyanoethyl acrylate, cyanobutyl methacrylate and the like; hydroxyalkyl acrylate and hydroxyalkyl methacrylate in which the carbon number of the hydroxyalkyl group is 1-12 such as 2-hydroxyethyl acrylate, 2-hydroxyethyl methacrylate, 3-hydroxypropyl acrylate and the like; fluorine-substituted benzyl group-containing acrylate and fluorine-substituted benzyl group-containing methacrylate such as fluorobenzyl acrylate, fluorobenzyl methacrylate and the like; fluoroalkyl group-containing acrylate and fluoroalkyl group-containing methacrylate such as trifluoroethyl acrylate, tetrafluoropropyl methacrylate and the like; unsaturated polycarboxylic acid polyalkyl ester other than those monomers encompassed by the monomer (ic) of polymer (i) in the inventive vulcanizable polymer composition: amino group-containing α,β-ethylenically unsaturated carboxylic acid ester such as dimethylaminomethyl acrylate, diethylaminoethyl acrylate and the like; and the like may be proposed.

As additional aromatic vinyl monomers, styrene, α,α-methylstyrene, and vinyl pyridine may be used.

As additional fluorine-containing vinyl monomers, fluoroethyl vinyl ether, fluoropropyl vinyl ether, ortho-fluoromethyl styrene, vinyl pentafluorobenzoate, difluoroethylene, and tetrafluoroethylene may be used.

As additional α,β-ethylenically unsaturated monocarboxylic acid monomers acrylic acid, and methacrylic acid may be used.

As copolymerisable antiaging agent, N-(4-anilinophenyl) acrylamide, N-(4-anilinophenyl) methacrylamide, N-(4-anilinphenyl) cinnamide, N-(4-anilinophenyl) crotonamide, N-phenyl-4- (3-vinylbenzyloxy) aniline, N-phenyl-4-(4-vinylbenzyloxy) aniline and the like may beproposed.

A plurality of species of these other copolymerisable monomers may be co-used. The content of these other monomer units in the nitrile rubber or hydrogenated nitrile rubber is tyically equal to or less than 80 wt.%, more preferably 50 wt.% or less and particularly preferably 10 wt.% or less with respect to 100 wt.% of all the monomer units.

The nitrile rubber may be used in its hydrogenated form. Hydrogenated nitrile rubber typcially comprises a residual carbon-carbon double bond unsaturation of less than about 30 mole percent, more preferably from 30 to 0.05 mole percent, even more preferably from 15 to 0.05 mole percent, even more preferably from 10.0 to 0.05 mole percent, even more preferably from 7.0 to 0.05 mole percent, most preferably from 5.5 to 0.05 mole percent.

The hydrogenation of the copolymer can take place in a manner known to a person skilled in the art. Suitable processes for the hydrogenation of nitrile rubbers are for example described in US 3,700,637, DE-PS 2 539 132, EP-A 134023, DE-A 35 40 918, EP-A 298386, DE-A 35 29 252, DE-A 34 33 392, US 4,464,515 and US 4,503,196

Moreover, the Mooney viscosity [ML1+4 @100°C] of the optionally hydrogenated nitrile rubber is preferably in the range of from 1-200, more preferably 30-150 and particularly preferably 39-120. If the Mooney viscosity of the optionally hydrogenated nitrile rubber is too low, there is a danger of a reduction in the mechanical strength of the obtained rubber crosslinked material being caused and conversely if it is too high, a fall in the processing properties of the obtained crosslinkable rubber composition may result.

The process for the production of the aforesaid nitrile rubber is not restricted in particular. In general, a process in which the α,β-ethylenically unsaturated nitrile monomer, α,β-ethylenically unsaturated dicarboxylic acid monoester monomer, diene monomer or α-olefin monomer, and other monomers that can be copolymerized with these which are added in accordance with requirements, are copolymerised is convenient and preferred. As the polymerisation method, any of the well known emulsion polymerisation methods, suspension polymerisation methods, bulk polymerisation methods and solution polymerisation methods can be used, but the emulsion polymerisation method is preferred due to the simplicity of the control of the polymerisation reaction. If the content of residual carbon-carbon double bonds in the copolymer obtained by copolymerisation is above the aforesaid range, hydrogenation (hydrogen addition reaction) of the copolymer may be performed. Such hydrogenation processes are not restricted in particular, and well known methods may be adopted.

The polymers, preferably these aforementioned elastomers, are well known in the art, either commercially available or may be produced by a person skilled in the art according to processes well described in literature.

### Component (ii): Polyamine crosslinking agent

The **second component (ii)** of the present polymer composition is at least one polyamine crosslinking agent to crosslink the aforesaid carboxyl groups of the terpolymer (i). The polyamine crosslinking agent is not restricted in particular as long as the said agent is (1) a compound having two or more amino groups or (2) a species that forms a compound having two or more amino groups during crosslinking in-situ. However, a compound wherein a plurality of hydrogens of an aliphatic hydrocarbon or aromatic hydrocarbon have been replaced by amino groups or hydrazide structures (a structure represented by "-CONHNH₂", wherein CO denotes carbonyl group) is preferred.

As examples of polyamine crosslinking agent (ii), for example the following shall be mentioned:
- an aliphatic polyamine, preferably hexamethylene diamine, hexamethylene diamine carbamate, tetramethylene pentamine, hexamethylene diamine-cinnamaldehyde adduct, or hexamethylene diamine-dibenzoate salt;
- an aromatic polyamine, preferably 2,2-bis (4-(4-aminophenoxy) phenyl) propane, 4,4'-methylenedianiline, m-phenylenediamine, p-phenylenediamine, or 4,4'-methylene bis (o-chloroaniline);
- compounds having at least two hydrazide structures, preferably isophthalic acid dihydrazide, adipic acid dihydrazide, or sebacic acid dihydrazide.

Among these, an aliphatic polyamine is preferred, and hexamethylene diamine carbamate is particularly preferred.

The content of the polyamine crosslinking agent (ii) in the vulcanizable polymer composition is in the range of from 0.2 to 20 parts by weight, preferably in the range of from 1 to 15 party by weight, more preferably of from 1.5 to 10 parts by weight based on 100 parts by weight of the polymer (i), preferably the nitrile rubber.

### Component (iii): Bi- or polycyclic aminic base

The third component (iii) of the vulcanizable polymer composition according to the present invention is at least one bi- or polycyclic aminic base. Suitable bi- or polycyclic aminic base are known to a person skilled in the art. Preferably, the bi- or polycyclic aminic base is selected from the group consisting of 1,8-diazabicyclo[5.4.0]undec-7-ene (DBU), 1,5-diazabicyclo[4.3.0]-5-nonene (DBN), 1, 4-diazabicyclo[2.2.2] octane (DABCO), 1,5,7-triazabicyclo[4.4.0]dec-5-ene (TBD), 7-methyl-1,5,7-triazabicyclo[4.4.0]dec-5-ene (MTBD) and its derivatives.

The bi- or polycyclic aminic bases can be prepared by methods known in the art. The preferred bases mentioned in the present invention are also commercially available.

In one embodiment of the present invention a bi- or polycyclic amine base is used having a pk_{b}-value (measured in DMSO) in the range of from -2 to 12.

### Component (iv): Alkali metal salt

The fourth component of the present polymer composition is at least one alkali metal salt (iv), preferably an alkali metal salt of a weak acid, more preferably heving a pkₐ of at least about 9.0, more preferably of at least about 10.0, most preferably in the range of from about 10.0 to about 14.0. In particular the alkali metal salt is a lithium, sodium or potassium salt.

Non-limiting examples of weak acids useful in the production of the above-mentioned alkali metal salt, in particular lithium, sodium or potassium salt, may be selected from the group consisting of carbonic acid, C₁-C₅₀ fatty acids, ethylene diamine tetra(acetic acid), phosphoric acid and mixtures thereof. Preferably, the weak acid is selected from carbonic acid and C₁-C₃₀ fatty acids. The most preferred salts for use in the present polymer composition are lithium carbonate, sodium carbonate and potassium carbonate.

Preferably, the alkali metal salt, in particular lithium, sodium or potassium salt, even more preferred lithium carbonate, sodium carbonate or potassium carbonate, is present in the inventive polymer composition in an amount in the range of from 0.5 to 30 parts by weight, preferably in the range of from 1 to 20 parts by weight, most preferably in the range of from 2.5 to 9 parts by weight per 100 parts by weight of the polymer component (i).

### Component (v): Antioxidant

A further, but optional component of the present polymer composition is at least one antioxidant. Suitable antioxidants are known by a person skilled in the art. Preferred antioxidants are selected from the group consisting of aminic antioxidants, preferably monofunctional or oligofunctional secondary aromatic amines or sterically hindered amines, and phenolic antioxidants, preferably monofunctional or oligofunctional substituted phenols. More preferably, the antioxidant is selected from alkylated and/or arylated diphenylamines and sterically hindered amines. Most preferably, the antioxidant is selected from the group consisting of 4,4'-bis-(1,1-dimethylbenzyl)-diphenylamine (CDPA), 4,4'-bis(octyl(-diphenylamine) (OCD) and 2,2,4-trimethyl-1,2-dihydroquinoline, polymerized (TMQ).

Preferably, the antioxidant is present in the polymer composition in an amount of from about 0,5 to about 4 parts by weight per 100 parts by weight of the polymer.

### Component (vi): Filler

Furtheron the polymer composition according to this invention optionally comprises at least one filler. The nature of the filler is not particularly restricted and the choice of suitable fillers is within the purview of a person skilled in the art. Non-limiting examples of suitable fillers include carbon black (e.g., FEF, MT, GPF and SRF), clays, titanium dioxide, silica fillers (with or without unsaturated silanes) and the like. The amount of filler is not critical and conventional. Preferably, the filler is present in an amount in the range of from about 20 to about 200 parts by weight per hundred parts by weight of the polymer (i) and preferably from about 20 to 130 parts by weight per 100 parts by weight of the polymer (i). More preferably, the filler is present in an amount in the range of from about 20 to about 100 parts by weight per hundred parts by weight of the polymer (i). Most preferably, the filler is present in an amount in the range of from about 40 to about 80 parts by weight per 100 parts by weight of the polymer (i).

### Other optional components:

Other conventional compounding ingredients may also be included into the polymer composition by mixing with the mandatory ingredients (i), (ii), (iii) and (iv) in the conventional manner. Such other compounding ingredients are used for their conventional purposes and include activators such as zinc oxide and magnesium oxide, anti-ageing agents, plasticizers, processing aids, reinforcing agents, fillers, promoters and retarders in amounts well known in the art.

Optionally the vulcanizable polymer composition according to the present invention may further comprise one or more additional vulcanizing agents besides the polyamine crosslinking agent (ii). Such additional vulcanization systems are well known in the art and the choice thereof is within the purview of a person skilled in the art.

In one embodiment, an organic peroxide (e.g., dicumyl peroxide or 2,2'-bis(tert-butylperoxy diisopropyl-benzene) may be used as additional vulcanizing agent in the polymer composition according to the present invention.

In another embodiment, sulfur or another conventional sulfur-containing vulcanizing agent or even mixtures thereof may be used as additional vulcanizing agent(s) in the polymer composition according to the present invention. Suitable additional sulfur-containing vulcanizing agents are commercially available, e.g. Vulkacit^{®} DM/C (benzothiazyl disulfide), Vulkacit^{®} Thiuram MS/C (tetramethyl thiuram monosulfide), and Vulkacit^{®} Thiuram/C (tetramethyl thiuram disulfide). It may be suitable to even add a further peroxide to such sulfur-based vulcanizing agents like e.g. zinc peroxide.

In yet another embodiment, a reactive phenol-formaldehyde resin and a Lewis acid activator may be used as additional vulcanizing agent in the polymer composition according to the present invention. It is known to those skilled in the art that reactive phenol-formaldehyde resins may be prepared by reacting a para-substituted phenol with a molar excess of formaldehyde - see, for example, US-A-2,726,224, the contents of which are hereby incorporated by reference as far as permissible under the respective jurisdiction. The use of such phenolformaldehyde resins in vulcanization systems for butyl rubber is e.g. well known. In one particular embodiment of the invention a reactive phenol-formaldehyde resin is used as component of the polymer composition with at least about 3 parts by weight per hundred parts by weight of the polymer (i), preferably the nitrile polymer as polymer (i) besides the polyamine crosslinking agent (ii). It is especially preferred to use from about 8 to about 16 parts by weight of a reactive phenol-formaldehyde resin per hundred parts by weight polymer (i) besides the polyamine crosslinking agent (ii). The Lewis acid activator may be present as a separate component such as stannous chloride (SnCl₂) or poly(chlorobutadiene). Alternatively, the Lewis acid activator may be present within the structure of the resin itself- for example, bromomethylated alkyl phenol-formaldehyde resin (which may be prepared by replacing some of the hydroxyl groups of the methylol group of the resin discussed above with bromine). The use of such halogenated resins in vulcanizing agents for butyl rubber is well known to those skilled in the art.

### Process for producing the vulcanizable polymer compositions:

The vulcanizable polymer compositions according to the present invention may be typically prepared by mixing the polymer (i) with at least one polyamine crosslinking agent (ii), at least one bi- or polycyclic aminic base (iii) and at least one alkali metal salt (iv).

### Process for producing a polymer vulcanizate:

In another of its aspects, the present invention provides a **process for producing a polymer vulcanizate** by vulcanizing at elevated temperature a polymer composition comprising:
(i) a polymer having a main polymer chain derived from
   (ia) at least 25% by weight to 100% by weight, preferably 25 to 85% by weight, more preferably 30 to 80% by weight, particularly preferably 45 to 75% by weight, based on the polymer of a first monomer which introduces at least one of a secondary carbon and a tertiary carbon to the main polymer chain, preferably at least one diene monomer, and
   (ib) in the range of from 0 to 74.9 % by weight, or alternatively 10 to 75 % by weight, preferably 10 to 60% by weight, more preferably 15 to 55% by weight, particularly preferably 20 to 50% by weight, based on the polymer of at least a second monomer, preferably an α,β-ethylenically unsaturated nitrile monomer;
   (ic) in the range from 0.1 to 20% by weight, preferably 0.5 to 20% by weight, more preferably 1 to 15% by weight, particularly preferably 1.5 to 10% by weight of at least one α,β-ethylenically unsaturated dicarboxylic acid monoester monomer, α ,β-ethylenically unsaturated dicarboxylic acid monomer, α,β-ethylenically unsaturated dicarboxylic acid anhydride monomer or α,β-ethylenically unsaturated dicarboxylic acid diester as a third monomer, preferably at least one α ,β-ethylenically unsaturated dicarboxylic acid monoester monomer;
   wherein the sum of all monomer units mentioned under (ia), (ib) and (ic) is 100% by
   weight;
(ii) at least one polyamine crosslinking agent,
(iii) at least one bi- or polycyclic aminic base, which is preferably selected from the group consisting of 1,8-diazabicyclo[5.4.0]undec-7-ene (DBU), 1,5-diazabicyclo[4.3.0]-5-nonene (DBN), 1,4-diazabicyclo[2.2.2]octane (DABCO) 1,5,7-triazabicyclo[4.4.0]dec-5-ene (TBD), 7-methyl-1,5,7-triazabicyclo[4.4.0]dec-5-ene (MTBD) and its derivatives, and
(iv) at least one alkali metal salt,
wherein said polymer (i) is mixed with at least one polyamine crosslinking agent (ii), at least one bi- or polycyclic aminic base (iii) and at least one alkali metal salt (iv).

In another embodiment, the present invention provides a **process for producing a polymer vulcanizate** by vulcanizing at elevated temperature a polymer composition comprising:
(i) a polymer having a main polymer chain derived from
   (ia) at least 25% by weight to 99.9% by weight, preferably 25 to 89.5% by weight based on the polymer, of a first monomer which introduces at least one of a secondary carbon and a tertiary carbon to the main polymer chain, preferably at least one diene monomer, and
   (ib) in the range of from 0 to 74.9 % by weight, preferably 10 to 60% by weight based on the polymer, of at least a second monomer, preferably an α,β-ethylenically unsaturated nitrile monomer;
   (ic) in the range from 0.1 to 20% by weight, preferably 0.5 to 20% by weight based on the polymer, of at least one α,β-ethylenically unsaturated dicarboxylic acid monoester monomer, α,β-ethylenically unsaturated dicarboxylic acid monomer, α ,β-ethylenically unsaturated dicarboxylic acid anhydride monomer or α ,β-ethylenically unsaturated dicarboxylic acid diester as a third monomer, preferably at least one α,β-ethylenically unsaturated dicarboxylic acid monoester monomer;
   wherein the sum of all monomer units mentioned under (ia), (ib) and (ic) is 100% by weight;
(ii) at least one polyamine crosslinking agent, and
(iii) at least one bi- or polycyclic aminic base, which is preferably selected from the group consisting of 1,8-diazabicyclo[5.4.0]undec-7-ene (DBU), 1,5-diazabicyclo[4.3.0]-5-nonene (DBN), 1,4-diazabicyclo[2.2.2]octane (DABCO) 1,5,7-triazabicyclo[4.4.0]dec-5-ene (TBD), 7-methyl-1,5,7-triazabicyclo[4.4.0]dec-5-ene (MTBD) and its derivatives,
comprising admixing said polymer (i) with at least one polyamine crosslinking agent (ii), at least one bi- or polycyclic aminic base (iii) and at least one alkali metal salt (iv).

In another embodiment of the present invention the above outlined process for preparing polymer vulcanizates of the novel polymer compositions additionally involves at least one antioxidant and at least one filler. In yet another embodiment of the present invention the process for preparing polymer vulcanizates of the novel polymer compositions involves not only at least one antioxidant and at least one filler, but additionally at least one further vulcanizing agent.

In such process for preparing the polymer vulcanizates the mixing of the polymer (i), the polyamine crosslinking agent (ii), at least one bi- or polycyclic aminic base (iii), at least one alkali metal salt (iv), and optionally the antioxidant, the filler and other conventional additives may be performed in any conventional manner known in the art. For example, all components may be admixed on a two-roll rubber mill or an internal mixer. The preferred optionally hydrogenated nitrile terpolymer e.g. used in the present process tends to be quite stiff, and is prone to bag when mixed on a two-roll rubber mill. The addition of a reactive phenol-formaldehyde resin generally improves the mixing of any hydrogenated terpolymer by reducing the bagging problem.

Thus, the polymer composition is mixed and prepared in a conventional manner and the temperature during mixing is maintained as is known in the art. Temperatures in the range of from 80 to 160°C have proven to be typically applicable, always depending on the specific type of polymer(s) (i) used and other components as chosen.

In a typical embodiment of the present process it is then preferred to heat the polymer composition to form the polymer vulcanizates using conventional procedures also well known in the art. Preferably, the vulcanizable polymer composition is heated to a temperature in the range of from about 130° to about 200°C, preferably from about 140° to about 190°C, more preferably from about 150° to about 180°C. Preferably, the heating is conducted for a period of from about 1 minutes to about 15 hours, more preferably from about 5 minutes to about 30 minutes.

It is possible and in some cases recommendable to perform a so-called post-curing at temperature in the range of from about 130° to about 200°C, preferably from about 140° to about 190°C, more preferably from about 150° to about 180°C for a period of up to 15 hours which is performed outside the die, e.g. by placing the vulcanizate, i.e. the respective form part, in a standard oven.

In a further embodiment the present invention relates to a polymer vulcanizate obtainable by the process mentioned before.

Therefore it is an object of the present invention to provide a polymer vulcanizate comprising a polymer (i) having a main polymer chain with repeating units derived from
(ia) at least 25% by weight to 100% by weight, preferably 25 to 85% by weight, more preferably 30 to 80% by weight, particularly preferably 45 to 75% by weight, based on the polymer of a first monomer which introduces at least one of a secondary carbon and a tertiary carbon to the main polymer chain, preferably at least one diene monomer,
(ib) in the range of 0 to 74.9 % by weight, or in the alternative from 10 to 75 % by weight, preferably 10 to 60% by weight, more preferably 15 to 55% by weight, particularly preferably 20 to 50% by weight, based on the polymer of at least a second monomer, preferably an α,β-ethylenically unsaturated nitrile monomer, and
(ic) in the range from 0.1 to 20% by weight, preferably 0.5 to 20% by weight, more preferably 1 to 15% by weight, particularly preferably 1.5 to 10% by weight of at least one α ,β-ethylenically unsaturated dicarboxylic acid monoester monomer, α,β-ethylenically unsaturated dicarboxylic acid monomer, α,β-ethylenically unsaturated dicarboxylic acid anhydride monomer or α,β-ethylenically unsaturated dicarboxylic acid diester as a third monomer, preferably at least one α,β-ethylenically unsaturated dicarboxylic acid monoester monomer;
wherein the sum of all monomer repeating units mentioned under (ia), (ib) and (ic) is 100% by weight, which polymer (i) contains crosslinking or bridging elements based on a polyamine crosslinking agent and wherein the polymer vulcanizate comprises at least one bi- or polycyclic aminic base (iii), preferably selected from the group consisting of 1,8-diazabicyclo[5.4.0]undec-7-ene (DBU), 1,5-diazabicyclo[4.3.0]-5-nonene (DBN), 1,4-diazabicyclo[2.2.2]octane (DABCO), 1,5,7-triazabicyclo[4.4.0]-dec-5-ene (TPD), 7-methyl-1,5,7-triazabicyclo[4.4.0]dec-5-ene (MTPD) and its derivatives and an alkali metal salt (iv).

In another embodiment the present invention provides a polymer vulcanizate comprising a polymer
(i) having a main polymer chain derived from
   (ia) at least 25% by weight to 99.9% by weight, preferably 25 to 89.9% by weight based on the polymer, of a first monomer which introduces at least one of a secondary carbon and a tertiary carbon to the main polymer chain, preferably at least one diene monomer, and
   (ib) in the range of from 0 to 74.9 % by weight, or in the alternative 10 to 75 % by weight, preferably 10 to 60 % by weight based on the polymer, of at least a second monomer, preferably an α,β-ethylenically unsaturated nitrile monomer;
   (ic) in the range from 0.1 to 20% by weight, preferably 0.5 to 20% by weight based on the polymer, of at least one α,β-ethylenically unsaturated dicarboxylic acid monoester monomer, α,β-ethylenically unsaturated dicarboxylic acid monomer, α,β-ethylenically unsaturated dicarboxylic acid anhydride monomer or α,β-ethylenically unsaturated dicarboxylic acid diester as a third monomer, preferably at least one α,β-ethylenically unsaturated dicarboxylic acid monoester monomer;
wherein the sum of all monomer units mentioned under (ia), (ib) and (ic) is 100% by weight which polymer (i) contains crosslinking or bridging elements based on a polyamine crosslinking agent and wherein the polymer vulcanizate comprises at least one bi- or polycyclic aminic base (iii), preferably selected from the group consisting of 1,8-diazabicyclo[5.4.0]undec-7-ene (DBU), 1,5-diazabicyclo[4.3.0]-5-nonene (DBN), 1,4-diazabicyclo[2.2.2]octane (DABCO), 1,5,7-triazabicyclo[4.4.0]-dec-5-ene (TPD), 7-methyl-1,5,7-triazabicyclo[4.4.0]dec-5-ene (MTPD) and its derivatives, and an alkali metal salt (iv).

This means that the polyamine crosslinking agent gets incorporated into the vulcanizate structure as crosslinking or bridging elements between the polymer chains during the vulcanization, while the bi- or polycyclic aminic base, preferably selected from the aforementioned group of compounds DBU, DBN, DABCO, TBD, MTPD and its derivatives is still present in the vulcanizate.

The process for preparing the aforementioned polymer vulcanizates can be used to prepare any type of mouldings or shaped parts.

### EXAMPLES 1-4

Embodiments of the present invention will be illustrated with reference to the following Examples which should not be used to limit the scope of the invention. Unless otherwise stated, all parts in the Examples are parts by weight.

In the Examples the following materials have been used:

### Rubber components:

### HNBR 1:

A hydrogenated acrylonitrile butadiene maleic monoethylester terpolymer prepared as hereinafter described hereinafter with a residual double bond content of 0.4 %, an acrylonitrile content of 36% by weight, a maleic monoethylester content of 4.8 % by weight, and a Mooney viscosity (ML 1+4 @100°C) of 98.6.

### HNBR 2:

Therban® A 3607, this being a hydrogenated acrylonitrile butadiene copolymer with a residual double bond content of at maximum 0.9 %, an acrylonitrile content of 36 % by weight, and a Mooney viscosity of (ML 1+4 @ 100°C) of 66.

### Other Components:

### Corax^{®} N 550/30:

carbon black, FEF (fast extrusion furnace); commercially available from Evonik-Degussa AG.

### DIAK No.1:

Hexamethylene diamine carbamate; commercially available from DuPont.

### Edenor^{®} C 18 98-100:

stearic acid (surfactant); commercially available from Cognis GmbH.

### Luvomaxx^{®} CDPA:

4, 4'-Bis-(1,1-dimethylbenzyl)-diphenylamine; commercially available from Lehmann & Voss

### RHENOGRAN^{®} XLA-60 (GE 2014):

preparations of 1,8-Diazabicyclo[5.4.0]undec-7-en (DBU) with an polymer binder commercially available from Rheinchemie Rheinau Chemie GmbH

### TAIC^{®}:

Triallylisocyanurat commercially available from Kettlitz Chemie GmbH & Co. KG.

### Perkadox^{®} 14-40 B-pd:

Preparation of Di(tert-butylperoxyisopropyl)benzol 40% on chalk and silica binder, commercially available from Akzo Nobel Polymer Chemicals BV.

### Rhenogran^{®} Li₂CO₃-50:

preparation of Li₂CO₃ (50% by weight) with a polymer binder (HNBR) available from Rheinchemie Rheinau GmbH.

### Dynamar^{™} RC-5251 Q:

Sodium Carbonate, 100%, commercially available from 3M.

### 1. Preparation of HNBR 1 by hydrogenation

The nitrile rubber "NBR1" used as starting basis for the hydrogenation to obtain the corresponding HNBR1 contained repeating units of acrylonitrile, butadiene and maleic acid monoethylester as termonomer in the amounts given in the following Table 1 and had the Mooney Viscosity also mentioned in Table 1.

**Table 1:**

| **NBR** | **Butadiene Content** | **Termonomer (iii)** | **Termonomer (iii) Content** | **Acrylonitrile Content** | **Mooney Viscosity** |
|---|---|---|---|---|---|
| | **[% by weight]** | | **[% by weight]** | **[% by weight]** | **(ML 1+4 @100°C)** |
| NBR 1 | 58.7 | Maleic acid monoethyl ester | 4.8 | 36.5 | 35 |

A 12% total solids solution of NBR 1 in monochlorobenzene ("MCB") as solvent was charged into a high pressure reactor and heated to 138°C while being agitated at 600rpm. Once the temperature was stabilized a solution of Wilkinson's catalyst and triphenylphosphine ("TPP") as co-catalyst were introduced and hydrogen was introduced into the vessel to reach a pressure of 85bar. The reaction was agitated for 4hrs at which time the hydrogen pressure was released and the reactor cooled to room temperature (about 22°C). The polymer solution was then removed from the reactor and coagulated using either steam or alcohol methods known in the art. The isolated polymer was then dried.

### 2. Preparation of the vulcanizable polymer compositions

The following procedure was used for each of the Examples 1-4. The components of the vulcanizable polymer compositions and the respective amounts thereof used are given in **Table 2.**

The components of the vulcanizable polymer composition were mixed in a Banbury mixer by conventional mixing. The polymer composition was then vulcanized at 180°C for a period of 20 minutes and a post curing step of 4h at 175°C.

Examples VV1 and VV4 are comparison examples, while Examples 2 and 3 are examples pursuant to the present invention.

### 3. Measurement of vulcanizate properties

The MDR measurements were made on a Monsanto-Rheometer MDR 2000.

The **tensile stress at rupture ("tensile strength")** of the vulcanizates was determined in accordance with ASTM D412-80.

**Hot air aging properties** of the vulcanizates were determined in accordance with ASTM-D573-88.

**Hardness properties** were determined using a Type A Shore durometer in accordance with ASTM-D2240-81.

The determination of the **Mooney viscosity (ML 1+4 @100°C)** is carried out in accordance with ASTM standard D 1646.

The properties of the vulcanizates obtained are reported in Table 3, 4, 5 and 6. They clearly illustrate the superiority of the vulcanizates according to the invention compared to those according to prior art (comparison example VV1 did not contain the alkali metal salt component (iv), while comparison example VV4 did not contain the bi- or polycyclic aminic base component (iii)). The vulcanizates according to the invention (Examples 2 and 3 with DBU as component (iii) and sodium- or lithium carbonate as component (iv)) showed improved moduli at room temperature (Table 4), an improved hardness at room temperature (Table 4), improved long-term hot air aging properties after 504 hours ageing and significantly improved compression set characteristics when compared to the vulcanizates of Example VV1 and VV2.

**Table 2: Formulation of vulcanizable polymer compositions, Examples 1-4**

| **EXAMPLE** | **VV 1** | **2** | **3** | **VV 4** |
|---|---|---|---|---|
| **HNBR 1** | 100 | 97 | 100 | |
| **HNBR 2** | | | | 97 |
| | | | | |
| **Corax^{®} N 550/30** | 40 | 40 | 40 | 40 |
| **Luvomaxx^{®} CDPA** | 1.1 | 1.1 | 1.1 | 1.1 |
| **Rhenogran^{®} Li₂CO₃-50** | | 6 | | 6 |
| **Dynamar^{™} RC-5251 Q** | | | 3 | |
| **Edenor^{®} C 18 98-100** | 0.5 | 0.5 | 0.5 | 0.5 |
| **Rhenogran^{®} XLA-60** | 4 | 4 | 4 | |
| **DIAK No.1** | 2.5 | 2.5 | 2.5 | |
| **TAIC^{®}** | | | | 1.5 |
| **Perkadox^{®} 14-40 B-pd** | | | | 7 |

**Table 3: MDR-Measurements on vulcanizates according to Examples 1-4**

| | | **Examples** | **VV 1** | **2** | **3** | **VV 4** |
|---|---|---|---|---|---|---|
| **MDR** | | | | | | |
| | **S' min** | dNm | 2.66 | 2.75 | 3.38 | 1.29 |
| | **S' max** | dNm | 32.13 | 30.51 | 28.59 | 23.6 |
| | **S'Ende** | dNm | 32.12 | 30.5 | 28.58 | 23.54 |
| | **Delta S'** | dNm | 29.47 | 27.76 | 25.21 | 22.31 |
| | **TS 2*¹** | s | 43 | 46 | 48 | 48 |
| | **t 50*²** | s | 143 | 157 | 165 | 168 |
| | **t 90*²** | s | 441 | 476 | 526 | 484 |
| | **t 95*²** | s | 609 | 631 | 698 | 618 |

| | | | | | | |
|---|---|---|---|---|---|---|
| ^{*1} "TS2" means the time until the Mooney viscosity has increased by two units compared to the starting point. * "t xx" means the time until "xx" percent of curing has occurred. | | | | | | |

The MDR measurements show that the inventive vulcanizable compositions and the comparative compositions dispose of a similar vulcanization pattern. Both types of compositions show a very small scorching tendency and the cure rate is very good.

**Table 4: Moduli (M), Elongation at break (EB), Tensile strength (TS) and Hardness (H) of vulcanizates according to Examples 1-4 (Measurements at RT *)**

| **Examples** | | **V1V1** | **2** | **3** | **VV4** |
|---|---|---|---|---|---|
| **M 10** | MPa | 0.8 | 0.8 | 0.9 | 0.6 |
| **M 25** | MPa | 1.6 | 1.7 | 2 | 1.1 |
| **M 50** | MPa | 3.1 | 3.5 | 4 | 1.7 |
| **M 100** | MPa | 9.6 | 9.9 | 10.9 | 4.2 |
| **EB** | % | 162 | 170 | 152 | 300 |
| **TS** | MPa | 19.1 | 20.4 | 19.5 | 26.6 |
| **H** | ShA | 72 | 73 | 77 | 67 |

| | | | | | |
|---|---|---|---|---|---|
| * RT means room temperature, i.e. 22 +/- 2°C | | | | | |

The data of Table 4 show that the mechanical properties of vulcanizates on the basis of inventive polymer compositions are of the same quality as the mechanical properties of the vulcanizates on the basis of the comparative compositions.

**Table 5: Compression set measurement of vulcanizates according to Examples 1-4**

| | | **Example** | **VV1** | **2** | **3** | **VV4** |
|---|---|---|---|---|---|---|
| | **170°C/504h** | % | 45 | 44 | 47 | 57 |
| | **170°C/1008h** | % | 81 | 73 | 58 | 81 |

The compression set measurements reveal that the vulcanizates prepared on the basis of the inventive polymer compositions on the long-term show a clearly improved and better compression set (i.e. a lower value) than the vulcanizates of the comparison examples VV1 and VV4.

**Table 6: Hot air ageing of vulcanizates according to Examples 1-4**

| | | **Examples** | **VV1** | **2** | **3** | **VV4** |
|---|---|---|---|---|---|---|
| **Hot air** | | | | | | |
| **7 d/170°C** | | | | | | |
| | **M 10** | MPa | 1.3 | 1.3 | 1.3 | 1 |
| | **M 25** | MPa | 2.9 | 2.9 | 2.4 | 2 |
| | **M 50** | MPa | 6.6 | 6.3 | 4.3 | 3.8 |
| | **M 100** | MPa | 18.7 | 17.1 | 9.7 | 9.6 |
| | **EB** | % | 94 | 97 | 203 | 172 |
| | **TS** | MPa | 17.7 | 15.9 | 19 | 21.2 |
| | **ΔEB** | % | -42 | -43 | 34 | -43 |
| | **ΔTS** | % | -7 | -22 | -3 | -20 |
| | **H** | ShA | 81 | 82 | 80 | 77 |
| | **ΔH** | ShA | 9 | 9 | 3 | 10 |

| **21 d/170°C** | | | | | | |
|---|---|---|---|---|---|---|
| | **M 10** | MPa | 7.4 | 5.4 | 1.7 | 2.9 |
| | **M 25** | MPa | -- | 11.4 | 3.3 | 6.8 |
| | **M 50** | MPa | -- | -- | 6.5 | 13.9 |
| | **M 100** | MPa | -- | -- | 13.5 | -- |
| | **TS** | MPa | 8.8 | 13.4 | 13.6 | 9.4 |
| | **ΔEB** | % | -93 | -82 | -34 | -88 |
| | **Δ TS** | % | -54 | -34 | -30 | -65 |
| | **H** | ShA | 92 | 91 | 84 | 88 |
| | **ΔH** | ShA | 19 | 18 | 7 | 21 |

The Δ EB- and Δ TS-values mentioned in Table 6 are defined as:
(1-((value of the specific property obtained in the respective mid- or longterm measurement / value of the same property obtained prior to ageing at room temperature) x 100). The values of such property obtained prior to ageing are given in Table 4. The Δ H-values mentioned in Table 6 represent the balance between the hardness value of the specific property obtained in the respective mid- or longterm measurement and the hardness value of the same property obtained prior to ageing at room temperature (i.e. the H-values given in Table 4). The loss of elongation at break (ΔEB) and tensile strenght (Δ TS) is smaller for the vulcanizates according to the invention, which represents an improvement. Furtheron the increase of hardness (ΔH) upon ageing is smaller for the vulcanizates according to the invention, this also representing an improvement over the comparative vulcanizates.

## Claims

1. A vulcanizable polymer composition comprising
(i) a polymer having a main polymer chain with monomer repeating units derived from
(ia) at least 25 % by weight to 99.9 % by weight, preferably 25 to 89.5 % by weight, more preferably 30 to 80% by weight, and particularly preferably 45 to 75% by weight based on the polymer, of a first monomer which introduces at least one of a secondary carbon and a tertiary carbon to the main polymer chain, preferably at least one diene monomer, and
(ib) in the range of from 0 to 74.9 % by weight, preferably 10 to 60% by weight, more preferably 15 to 55% by weight, particularly preferably 20 to 50% by weight, based on the polymer of at least a second monomer, preferably an α,β-ethylenically unsaturated nitrile monomer;
(ic) in the range of from 0.1 to 20% by weight, preferably 0.5 to 20% by weight, more preferably 1 to 15% by weight, particularly preferably 1.5 to 10% by weight based on the polymer of at least one α,β-ethylenically unsaturated dicarboxylic acid monoester monomer, α,β-ethylenically unsaturated dicarboxylic acid monomer, α,β-ethylenically unsaturated dicarboxylic acid anhydride monomer or α,β-ethylenically unsaturated dicarboxylic acid diester as a third monomer,
wherein the sum of all monomer units mentioned under (ia), (ib) and (ic) is 100% by weight;
(ii) at least one polyamine crosslinking agent,
(iii) at least one bi- or polycyclic aminic base, and
(iv) at least one alkali metal salt.

2. The vulcanizable polymer composition according to claim 1, wherein the alkali metal salt is selected from the group of a lithium salt, a sodium salt, a potassium salt and mixtures thereof.

3. The vulcanizable polymer composition according to claim 1, wherein the alkali metal salt is lithium carbonate, sodium carbonate or potassium carbonate.

4. The vulcanizable polymer composition according to claim 1 comprising as component (iii) at least one bi- or polycyclic aminic base which is selected from the group consisting of 1,8-diazabicyclo[5.4.0]undec-7-ene (DBU), 1,5-diazabicyclo[4.3.0]-5-nonene (DBN), 1,4-diazabicyclo[2.2.2]octane (DABCO) 1,5,7-triazabicyclo[4.4.0]dec-5-ene (TBD), 7-methyl-1,5,7-triazabicyclo[4.4.0]dec-5-ene (MTBD) and its derivatives.

5. The vulcanizable polymer composition according to claim 1 comprising
(i) an optionally hydrogenated nitrile polymer derived from
(ia) at least one conjugated diene,
(ib) at least one α,β-unsaturated nitrile, and
(ic) at least one α,β-ethylenically unsaturated dicarboxylic acid monoester monomer, α,β-ethylenically unsaturated dicarboxylic acid monomer, α,β-ethylenically unsaturated dicarboxylic acid anhydride monomer or α,β-ethylenically unsaturated dicarboxylic acid diester as third monomer,
(ii) at least one polyamine crosslinking agent,
(iii) at least one bi- or polycyclic aminic base, which is in particular selected from the group consisting of 1,8-diazabicyclo[5.4.0]undec-7-ene (DBU), 1,5-diazabicyclo[4.3.0]-5-nonene (DBN), 1,4-diazabicyclo[2.2.2]octane (DABCO) 1,5,7-triazabicyclo[4.4.0]dec-5-ene (TBD), 7-methyl-1,5,7-triazabicyclo[4.4.0]dec-5-ene (MTBD) and its derivatives,
(iv) at least one alkali metal salt,
(v) optionally at least one antioxidant, and
(vi) optionally at least one filler.

6. The vulcanizable polymer composition according to claim 5 wherein the optionally hydrogenated nitrile polymer is derived from
(ia) at least one conjugated diene with a carbon number of at least 4, preferably 4 to 6 carbon atoms, more preferably 1,3-butadiene, isoprene, 2,3-dimethyl-1,3-butadiene, or 1,3-pentadiene or at least one non-conjugated diene with a carbon number in the range of from 5 to 12, more preferably 1,4-pentadiene or 1,4-hexadiene,
(ib) at least one α,β-ethylenically unsaturated nitrile, preferably acrylonitrile, an α-haloacrylonitrile, more preferably α-chloro acrylonitrile or α-bromo acrylonitrile, or an α-alkyl acrylonitrile, more preferably methacrylonitrile or ethacrylonitrile, and
(ic) at least one α,β-ethylenically unsaturated dicarboxylic acid monoester monomer, α,β-ethylenically unsaturated dicarboxylic acid monomer, α,β-ethylenically unsaturated dicarboxylic acid anhydride monomer or α,β-ethylenically unsaturated dicarboxylic acid diester as a third monomer (ic).

7. The vulcanizable polymer composition according to claim 4 or 5, wherein the ester group of the α,β-ethylenically unsaturated dicarboxylic acid monoester or -diester monomer comprises an alkyl group, cycloalkyl group, alkyl cycloalkyl group or aryl group bonded via an oxygen atom to the carbonyl group, wherein the carbon number of the alkyl group is preferably in the range of from 1 to 10, more preferably 2, 3, 4, 5 to 6, the carbon number of the cycloalkyl group preferably in the range of from 5 to 12, more preferably in the range of from 6 to 10, the carbon number of the alkyl cycloalkyl group preferably in the range of from 6 to 12, and more preferably in the range of from 7 to 10.

8. The vulcanizable polymer composition according to claim 1, wherein at least one of the following monomers is used as α,β-ethylenically unsaturated dicarboxylic acid monoester monomer (ic)
• maleic acid monoalkyl esters, preferably monomethyl maleate, monoethyl maleate, monopropyl maleate, and mono n-butyl maleate;
• maleic acid monocycloalkyl esters, preferably monocyclopentyl maleate, monocyclohexyl maleate, and monocycloheptyl maleate;
• maleic acid monoalkylcycloalkyl esters, preferably monomethylcyclopentyl maleate, and monoethylcyclohexyl maleate;
• maleic acid monoaryl ester, preferably monophenyl maleate;
• maleic acid mono benzyl ester, preferably monobenzyl maleate;
• fumaric acid monoalkyl esters, preferably monomethyl fumarate, monoethyl fumarate, monopropyl fumarate, and mono n-butyl fumarate;
• fumaric acid monocycloalkyl esters, preferably monocyclopentyl fumarate, monocyclohexyl fumarate, and monocycloheptyl fumarate;
• fumaric acid monoalkylcycloalkyl esters, preferably monomethylcyclopentyl fumarate, and monoethylcyclohexyl fumarate;
• fumaric acid monoaryl ester, preferably monophenyl fumarate;
• fumaric acid mono benzyl ester, preferably monobenzyl fumarate;
• citraconic acid monoalkyl esters, preferably monomethyl citraconate, monoethyl citraconate, monopropyl citraconate, and mono n-butyl citraconate;
• citraconic acid monocycloalkyl esters, preferably monocyclopentyl citraconate, monocyclohexyl citraconate, and monocycloheptyl citraconate;
• citraconic acid monoalkylcycloalkyl esters, preferably monomethylcyclopentyl citraconate, and monoethylcyclohexyl citraconate;
• citraconic acid mono aryl ester, preferably monophenyl citraconate;
• citraconic acid mono benzyl ester, preferably monobenzyl citraconate;
• itaconic acid mono alkyl esters, preferably monomethyl itaconate, monoethyl itaconate, monopropyl itaconate, and mono n-butyl itaconate;
• itaconic acid monocycloalkyl esters, preferably monocyclopentyl itaconate, monocyclohexyl itaconate, and monocycloheptyl itaconate;
• itaconic acid monoalkylcycloalkyl esters, preferably monomethylcyclopentyl itaconate, and monoethylcyclohexyl itaconate;
• itaconic acid mono aryl ester, preferably monophenyl itaconate;
• itaconic acid mono benzyl ester, preferably monobenzyl itaconate;
• mesaconic acid monoalkyl ester, preferably mesaconic monoethyl ester.

9. The vulcanizable polymer composition according to claim 1, wherein maleic acid, fumaric acid, itaconic acid, citraconic acid, mesaconic acid or the anhydrides of maleic acid, fumaric acid, itaconic acid and citraconic acid are used as third monomer (ic).

10. The vulcanizable polymer composition according to claim 1, wherein an aliphatic polyamine, preferably hexamethylene diamine, hexamethylene diamine carbamate, tetramethylene pentamine, hexamethylene diamine-cinnamaldehyde adduct, or hexamethylene diamine-dibenzoate salt, an aromatic polyamine, preferably 2,2-bis (4-(4-aminophenoxy) phenyl) propane, 4,4'-methylenedianiline, m-phenylenediamine, p-phenylenediamine, or 4,4'-methylene bis (o-chloroaniline) or compounds having at least two hydrazide structures, preferably isophthalic acid dihydrazide, adipic acid dihydrazide, or sebacic acid dihydrazide is used as polyamine crosslinking agent (ii).

11. A process for preparing a vulcanizable polymer composition in accordance with claim 1 comprising mixing the polymer (i) with at least one polyamine crosslinking agent (ii), at least one bi- or polycyclic aminic base (iii) and at least one alkali metal salt (iv).

12. A process for preparing a polymer vulcanizate by vulcanizing at elevated temperature a polymer (i) having a main polymer chain with monomer repeating units derived from
(ia) at least 25% by weight to 99.9 % by weight, preferably 25 to 89.5 % by weight, more preferably 30 to 80% by weight, particularly preferably 45 to 75% by weight, based on the polymer of a first monomer which introduces at least one of a secondary carbon and a tertiary carbon to the main polymer chain, preferably at least one diene monomer, and
(ib) in the range of from 0 to 74.9 % by weight, preferably 10 to 60% by weight, more preferably 15 to 55% by weight, particularly preferably 20 to 50% by weight, based on the polymer of at least a second monomer, preferably an α,β-ethylenically unsaturated nitrile monomer;
(ic) in the range from 0.1 to 20% by weight, preferably 0.5 to 20% by weight, more preferably 1 to 15% by weight, particularly preferably 1.5 to 10% by weight based on the polymer of at least one α,β-ethylenically unsaturated dicarboxylic acid monoester monomer, α,β-ethylenically unsaturated dicarboxylic acid monomer, α,β-ethylenically unsaturated dicarboxylic acid anhydride monomer or α,β-ethylenically unsaturated dicarboxylic acid diester as a third monomer, preferably at least one α,β-ethylenically unsaturated dicarboxylic acid monoester monomer;
wherein the sum of all monomer repeating units mentioned under (ia), (ib) and (ic) is 100% by weight with at least one polyamine crosslinking agent (ii), at least one bi- or polycyclic aminic base (iii), preferably selected from the group consisting of 1,8-diazabicyclo[5.4.0]undec-7-ene (DBU), 1,5-diazabicyclo[4.3.0]-5-nonene (DBN), 1,4-diazabicyclo[2.2.2]octane (DABCO) 1,5,7-triazabicyclo[4.4.0]dec-5-ene (TBD), 7-methyl-1,5,7-triazabicyclo[4.4.0]dec-5-ene (MTBD) and its derivatives, and at least one alkali metal salt (iv).

13. A polymer vulcanizate comprising a polymer (i) having a main polymer chain derived from
(ia) at least 25% by weight to 99.9 % by weight, preferably 25 to 89.5 % by weight, more preferably 30 to 80% by weight, particularly preferably 45 to 75% by weight, based on the polymer of a first monomer which introduces at least one of a secondary carbon and a tertiary carbon to the main polymer chain, preferably at least one diene monomer,
(ib) in the range of from 0 to 74.9 % by weight, preferably 10 to 60% by weight, more preferably 15 to 55% by weight, particularly preferably 20 to 50% by weight, based on the polymer of at least a second monomer, preferably an α,β-ethylenically unsaturated nitrile monomer, and
(ic) in the range from 0.1 to 20% by weight, preferably 0.5 to 20% by weight, more preferably 1 to 15% by weight, particularly preferably 1.5 to 10% by weight based on the polymer of at least one α,β-ethylenically unsaturated dicarboxylic acid monoester monomer, α,β-ethylenically unsaturated dicarboxylic acid monomer, α,β-ethylenically unsaturated dicarboxylic acid anhydride monomer or α,β-ethylenically unsaturated dicarboxylic acid diester as a third monomer, preferably at least one α,β-ethylenically unsaturated dicarboxylic acid monoester monomer;
wherein the sum of all monomer repeating units mentioned under (ia), (ib) and (ic) is 100% by weight which polymer (i) contains crosslinking or bridging elements based on a polyamine crosslinking agent and wherein the polymer vulcanizate comprises at least one bi- or polycyclic aminic base, preferably selected from the group consisting of 1,8-diazabicyclo[5.4.0]undec-7-ene (DBU), 1,5-diazabicyclo[4.3.0]-5-nonene (DBN), 1,4-diazabicyclo[2.2.2]octane (DABCO), 1,5,7-triazabicyclo[4.4.0]-dec-5-ene (TPD), 7-methyl-1,5,7-triazabicyclo[4.4.0]dec-5-ene (MTPD) and its derivatives, and at least one alkali metal salt (iv).

14. The polymer vulcanizate according to claim 13 in the form of a moulding or a shaped part.

## Patentansprüche

1. Vulkanisierbare Polymerzusammensetzung, umfassend
(i) ein Polymer mit einer Polymerhauptkette mit Monomer-Wiederholungseinheiten, die sich von
(ia) mindestens 25 Gew.-% bis 99,9 Gew.-%, vorzugsweise 25 bis 89,5 Gew.-%, weiter bevorzugt 30 bis 80 Gew.-% und besonders bevorzugt 45 bis 75 Gew.-%, bezogen auf das Polymer, eines ersten Monomers, das einen sekundären Kohlenstoff und/oder einen tertiären Kohlenstoff in die Polymerhauptkette einführt, vorzugsweise mindestens eines Dien-Monomers, und
(ib) im Bereich von 0 bis 74,9 Gew.-%, vorzugsweise 10 bis 60 Gew.-%, weiter bevorzugt 15 bis 55 Gew.-%, besonders bevorzugt 20 bis 50 Gew.-%, bezogen auf das Polymer, mindestens eines zweiten Monomers, vorzugsweise eines α,β-ethylenisch ungesättigten Nitrilmonomers,
(ic) im Bereich von 0,1 bis 20 Gew.-%, vorzugsweise 0,5 bis 20 Gew.-%, weiter bevorzugt 1 bis 15 Gew.-%, besonders bevorzugt 1,5 bis 10 Gew.-%, bezogen auf das Polymer, mindestens eines α,β-ethylenisch ungesättigten Dicarbonsäuremonoester-Monomers, α,β-ethylenisch ungesättigten Dicarbonsäure-Monomers, α,β-ethylenisch ungesättigten Dicarbonsäureanhydrid-Monomers oder α,β-ethylenisch ungesättigten Dicarbonsäurediesters als drittem Monomer ableiten; wobei die Summe aller unter (ia), (ib) und (ic) aufgeführten Monomereinheiten 100 Gew.-% beträgt;
(ii) mindestens einen Polyamin-Vernetzer,
(iii) mindestens eine bi- oder polycyclische aminische Base und
(iv) mindestens ein Alkalimetallsalz.

2. Vulkanisierbare Polymerzusammensetzung nach Anspruch 1, wobei das Alkalimetallsalz aus der Gruppe bestehend aus einem Lithiumsalz, einem Natriumsalz, einem Kaliumsalz und Mischungen davon ausgewählt ist.

3. Vulkanisierbare Polymerzusammensetzung nach Anspruch 1, wobei es sich bei dem Alkalimetallsalz um Lithiumcarbonat, Natriumcarbonat oder Kaliumcarbonat handelt.

4. Vulkanisierbare Polymerzusammensetzung nach Anspruch 1, umfassend als Komponente (iii) mindestens eine bi- oder polycyclische aminische Base aus der Gruppe bestehend aus 1,8-Diazabicyclo[5.4.0]undec-7-en (DBU), 1,5-Diazabicyclo-[4.3.0]-5-nonen (DBN), 1,4-Diazabicyclo[2.2.2]-octan (DABCO), 1,5,7-Triazabicyclo[4.4.0]dec-5-en (TBD), 7-Methyl-1,5,7-triazabicyclo[4.4.0]dec-5-en (MTBD) und Derivaten davon.

5. Vulkanisierbare Polymerzusammensetzung nach Anspruch 1, umfassend
(i) ein gegebenenfalls hydriertes Nitrilpolymer, das sich von
(ia) mindestens einem konjugierten Dien,
(ib) mindestens einem α,β-ungesättigten Nitril und
(ic) mindestens einem α,β-ethylenisch ungesättigten Dicarbonsäuremonoester-Monomer, α,β-ethylenisch ungesättigten Dicarbonsäure-Monomer, α,β-ethylenisch ungesättigten Dicarbonsäureanhydrid-Monomer oder α,β-ethylenisch ungesättigten Dicarbonsäurediester als drittem Monomer
ableitet,
(ii) mindestens einen Polyamin-Vernetzer,
(iii) mindestens eine bi- oder polycyclische aminische Base, die insbesondere aus der Gruppe bestehend aus 1,8-Diazabicyclo-[5.4.0]undec-7-en (DBU), 1,5-Diazabicyclo[4.3.0]-5-nonen (DBN), 1,4-Diazabicyclo[2.2.2]octan (DABCO), 1,5,7-Triazabicyclo[4.4.0]dec-5-en (TBD), 7-Methyl-1,5,7-triazabicyclo[4.4.0]dec-5-en (MTBD) und Derivaten davon ausgewählt ist,
(iv) mindestens ein Alkalimetallsalz,
(v) gegebenenfalls mindestens ein Antioxidans und
(vi) gegebenenfalls mindestens einen Füllstoff.

6. Vulkanisierbare Polymerzusammensetzung nach Anspruch 5, wobei sich das gegebenenfalls hydrierte Nitrilpolymer von
(ia) mindestens einem konjugierten Dien mit einer Kohlenstoffzahl von mindestens 4, vorzugsweise 4 bis 6 Kohlenstoffatomen, weiter bevorzugt 1,3-Butadien, Isopren, 2,3-Dimethyl-1,3-butadien oder 1,3-Pentadien, oder mindestens einem nicht konjugierten Dien mit einer Kohlenstoffzahl im Bereich von 5 bis 12, weiter bevorzugt 1,4-Pentadien oder 1,4-Hexadien,
(ib) mindestens einem α,β-ethylenisch ungesättigten Nitril, vorzugsweise Acrylnitril, einem α-Halogenacrylnitril, weiter bevorzugt α-Chloracrylnitril oder α-Bromacrylnitril, oder einem α-Alkylacrylnitril, weiter bevorzugt Methacrylnitril oder Ethacrylnitril, und
(ic) mindestens einem α-ethylenisch ungesättigten Dicarbonsäuremonoester-Monomer, α,β-ethylenisch ungesättigten Dicarbonsäure-Monomer, α,β-ethylenisch ungesättigten Dicarbonsäureanhydrid-Monomer oder α,β-ethylenisch ungesättigten Dicarbonsäurediester als drittem Monomer
ableitet.

7. Vulkanisierbare Polymerzusammensetzung nach Anspruch 4 oder 5, wobei die Estergruppe des α,β-ethylenisch ungesättigten Dicarbonsäuremonoester- oder -diester-Monomers eine über ein Sauerstoffatom an die Carbonylgruppe gebundene Alkylgruppe, Cycloalkylgruppe, Alkylcycloalkylgruppe oder Arylgruppe umfasst, wobei die Kohlenstoffzahl der Alkylgruppe vorzugsweise im Bereich von 1 bis 10 liegt und weiter bevorzugt 2, 3, 4, 5 bis 6 beträgt, die Kohlenstoffzahl der Cycloalkylgruppe vorzugsweise im Bereich von 5 bis 12 und weiter bevorzugt im Bereich von 6 bis 10 liegt und die Kohlenstoffzahl der Alkylcycloalkylgruppe vorzugsweise im Bereich von 6 bis 12 und weiter bevorzugt im Bereich von 7 bis 10 liegt.

8. Vulkanisierbare Polymerzusammensetzung nach Anspruch 1, wobei mindestens eines der folgenden Monomeren als α,β-ethylenisch ungesättigtes Dicarbonsäuremonoester-Monomer (ic) verwendet wird:
• Maleinsäuremonoalkylester, vorzugsweise Monomethylmaleat, Monoethylmaleat, Monopropylmaleat und Mono-n-butylmaleat;
• Maleinsäuremonocycloalkylester, vorzugsweise Monocyclopentylmaleat, Monocyclohexylmaleat und Monocycloheptylmaleat;
• Maleinsäuremonoalkylcycloalkylester, vorzugsweise Monomethylcyclopentylmaleat und Monoethylcyclohexylmaleat;
• Maleinsäuremonoarylester, vorzugsweise Monophenylmaleat;
• Maleinsäuremonobenzylester, vorzugsweise Monobenzylmaleat;
• Fumarsäuremonoalkylester, vorzugsweise Monomethylfumarat, Monoethylfumarat, Monopropylfumarat und Mono-n-butylfumarat;
• Fumarsäuremonocycloalkylester, vorzugsweise Monocyclopentylfumarat, Monocyclohexylfumarat und Monocycloheptylfumarat;
• Fumarsäuremonoalkylcycloalkylester, vorzugsweise Monomethylcyclopentylfumarat und Monoethylcyclohexylfumarat;
• Fumarsäuremonoarylester, vorzugsweise Monophenylfumarat;
• Fumarsäuremonobenzylester, vorzugsweise Monobenzylfumarat;
• Citraconsäuremonoalkylester, vorzugsweise Monomethylcitraconat, Monoethylcitraconat, Monopropylcitraconat und Mono-n-butylcitraconat;
• Citraconsäuremonocycloalkylester, vorzugsweise Monocyclopentylcitraconat, Monocyclohexylcitraconat und Monocycloheptylcitraconat;
• Citraconsäuremonoalkylcycloalkylester, vorzugsweise Monomethylcyclopentylcitraconat und Monoethylcyclohexylcitraconat;
• Citraconsäuremonoarylester, vorzugsweise Monophenylcitraconat;
• Citraconsäuremonobenzylester, vorzugsweise Monobenzylcitraconat;
• Itaconsäuremonoalkylester, vorzugsweise Monomethylitaconat, Monoethylitaconat, Monopropylitaconat und Mono-n-butylitaconat;
• Itaconsäuremonocycloalkylester, vorzugsweise Monocyclopentylitaconat, Monocyclohexylitaconat und Monocycloheptylitaconat;
• Itaconsäuremonoalkylcycloalkylester, vorzugsweise Monomethylcyclopentylitaconat und Monoethylcyclohexylitaconat;
• Itaconsäuremonoarylester, vorzugsweise Monophenylitaconat;
• Itaconsäuremonobenzylester, vorzugsweise Monobenzylitaconat.
• Mesaconsäuremonoalkylester, vorzugsweise Mesaconsäuremonoethylester.

9. Vulkanisierbare Polymerzusammensetzung nach Anspruch 1, wobei Maleinsäure, Fumarsäure, Itaconsäure, Citraconsäure, Mesaconsäure oder die Anhydride von Maleinsäure, Fumarsäure, Itaconsäure und Citraconsäure als drittes Monomer (ic) verwendet werden.

10. Vulkanisierbare Polymerzusammensetzung nach Anspruch 1, wobei ein aliphatisches Polyamin, vorzugsweise Hexamethylendiamin, Hexamethylendiamincarbamat, Tetramethylenpentamin, Hexamethylendiamin-Zimtaldehyd-Addukt oder Hexamethylendiamindibenzoatsalz, ein aromatisches Polyamin, vorzugsweise 2,2-Bis(4-(4-aminophenoxy)-phenyl)propan, 4,4'-Methylendianilin, m-Phenylendiamin, p-Phenylendiamin oder 4,4'-Methylen-bis(o-chloranilin) oder Verbindungen mit mindestens zwei Hydrazid-Strukturen, vorzugsweise Isophthalsäuredihydrazid, Adipinsäuredihydrazid oder Sebacinsäuredihydrazid, als Polyamin-Vernetzer (ii) verwendet wird.

11. Verfahren zur Herstellung einer vulkanisierbaren Polymerzusammensetzung nach Anspruch 1, bei dem man das Polymer (i) mit mindestens einem Polyamin-Vernetzer (ii), mindestens einer bi- oder polycyclischen aminischen Base (iii) und mindestens einem Alkalimetallsalz (iv) mischt.

12. Verfahren zur Herstellung eines Polymervulkanisats durch Vulkanisieren eines Polymers (i) mit einer Polymerhauptkette mit Monomer-Wiederholungseinheiten, die sich von
(ia) mindestens 25 Gew.-% bis 99,9 Gew.-%, vorzugsweise 25 bis 89,5 Gew.-%, weiter bevorzugt 30 bis 80 Gew.-% und besonders bevorzugt 45 bis 75 Gew.-%, bezogen auf das Polymer, eines ersten Monomers, das einen sekundären Kohlenstoff und/oder einen tertiären Kohlenstoff in die Polymerhauptkette einführt, vorzugsweise mindestens eines Dien-Monomers, und
(ib) im Bereich von 0 bis 74,9 Gew.-%, vorzugsweise 10 bis 60 Gew.-%, weiter bevorzugt 15 bis 55 Gew.-%, besonders bevorzugt 20 bis 50 Gew.-%, bezogen auf das Polymer, mindestens eines zweiten Monomers, vorzugsweise eines α,β-ethylenisch ungesättigten Nitrilmonomers,
(ic) im Bereich von 0,1 bis 20 Gew.-%, vorzugsweise 0,5 bis 20 Gew.-%, weiter bevorzugt 1 bis 15 Gew.-%, besonders bevorzugt 1,5 bis 10 Gew.-%, bezogen auf das Polymer, mindestens eines α,β-ethylenisch ungesättigten Dicarbonsäuremonoester-Monomers, α,β-ethylenisch ungesättigten Dicarbonsäure-Monomers, α,β-ethylenisch ungesättigten Dicarbonsäureanhydrid-Monomers oder α,β-ethylenisch ungesättigten Dicarbonsäurediester-Monomers als drittem Monomer, vorzugsweise mindestens eines α,β-ethylenisch ungesättigten Dicarbonsäuremonoesters,
ableiten; wobei die Summe aller unter (ia), (ib) und (ic) aufgeführten Monomerwiederholungseinheiten 100 Gew.-% beträgt, mit mindestens einem Polyamin-Vernetzer (ii), mindestens einer bi- oder polycyclischen aminischen Base (iii), die vorzugsweise aus der Gruppe bestehend aus 1,8-Diazabicyclo[5.4.0]undec-7-en (DBU), 1,5-Diazabicyclo[4.3.0]-5-nonen (DBN), 1,4-Diazabicyclo[2.2.2]octan (DABCO), 1,5,7-Tri-azabicyclo[4.4.0]dec-5-en (TBD), 7-Methyl-1,5,7-triazabicyclo[4.4.0]dec-5-en (MTBD) und Derivaten davon ausgewählt ist, und mindestens einem Alkalimetallsalz (iv) bei erhöhter Temperatur.

13. Polymervulkanisat, umfassend ein Polymer (i) mit einer Polymerhauptkette, die sich von
(ia) mindestens 25 Gew.-% bis 99,9 Gew.-%, vorzugsweise 25 bis 89,5 Gew.-%, weiter bevorzugt 30 bis 80 Gew.-% und besonders bevorzugt 45 bis 75 Gew.-%, bezogen auf das Polymer, eines ersten Monomers, das einen sekundären Kohlenstoff und/oder einen tertiären Kohlenstoff in die Polymerhauptkette einführt, vorzugsweise mindestens eines Dien-Monomers,
(ib) im Bereich von 0 bis 74,9 Gew.-%, vorzugsweise 10 bis 60 Gew.-%, weiter bevorzugt 15 bis 55 Gew.-%, besonders bevorzugt 20 bis 50 Gew.-%, bezogen auf das Polymer, mindestens eines zweiten Monomers, vorzugsweise eines α,β-ethylenisch ungesättigten Nitrilmonomers, und
(ic) im Bereich von 0,1 bis 20 Gew.-%, vorzugsweise 0,5 bis 20 Gew.-%, weiter bevorzugt 1 bis 15 Gew.-%, besonders bevorzugt 1,5 bis 10 Gew.-%, bezogen auf das Polymer, mindestens eines α,β-ethylenisch ungesättigten Dicarbonsäuremonoester-Monomers, α,β-ethylenisch ungesättigten Dicarbonsäure-Monomers, α,β-ethylenisch ungesättigten Dicarbonsäureanhydrid-Monomers oder α,β-ethylenisch ungesättigten Dicarbonsäurediester-Monomers als drittem Monomer, vorzugsweise mindestens eines α,β-ethylenisch ungesättigten Dicarbonsäuremonoesters,
ableitet; wobei die Summe aller unter (ia), (ib) und (ic) aufgeführten Monomerwiederholungseinheiten 100 Gew.-% beträgt, wobei das Polymer (i) vernetzende oder verbrückende Elemente auf Basis eines Polyamin-Vernetzers enthält und wobei das Polymervulkanisat mindestens eine bi- oder polycyclische aminische Base, die vorzugsweise aus der Gruppe bestehend aus 1,8-Diazabicyclo-[5.4.0]undec-7-en (DBU), 1,5-Diazabicyclo[4.3.0]-5-nonen (DBN), 1,4-Diazabicyclo[2.2.2]octan (DABCO), 1,5,7-Triazabicyclo[4.4.0]dec-5-en (TBD), 7-Methyl-1,5,7-triazabicyclo[4.4.0]dec-5-en (MTBD) und Derivaten davon ausgewählt ist, und mindestens ein Alkalimetallsalz (iv) umfasst.

14. Polymervulkanisat nach Anspruch 13 in Form eines Formteils oder Umformteils.

## Revendications

1. Composition de polymère vulcanisable comprenant
(i) un polymère possédant une chaîne principale de polymère comportant des motifs récurrents monomères dérivés de
(ia) au moins 25 % en poids à 99,9 % en poids, de préférence 25 à 89,5 % en poids, de façon plus préférée 30 à 80% en poids, et de façon particulièrement préférée 45 à 75% en poids, par rapport au polymère, d'un premier monomère qui introduit au moins un carbone secondaire ou un carbone tertiaire dans la chaîne principale de polymère, de préférence au moins un monomère diénique, et
(ib) dans la fourchette de 0 à 74,9 % en poids, de préférence de 10 à 60% en poids, de façon plus préférée de 15 à 55% en poids, de façon particulièrement préférée de 20 à 50% en poids, par rapport au polymère, d'au moins un deuxième monomère, de préférence un monomère nitrile insaturé à insaturation α,β-éthylénique ;
(ic) dans la fourchette de 0,1 à 20% en poids, de préférence de 0,5 à 20% en poids, de façon plus préférée de 1 à 15% en poids, de façon particulièrement préférée de 1,5 à 10% en poids, par rapport au polymère, d'au moins un monomère monoester d'acide dicarboxylique insaturé à insaturation α,β-éthylénique, un monomère acide dicarboxylique insaturé à insaturation α,β-éthylénique, un monomère anhydride d'acide dicarboxylique insaturé à insaturation α,β-éthylénique ou diester d'acide dicarboxylique insaturé à insaturation α,β-éthylénique en tant que troisième monomère,
dans laquelle la somme de tous les motifs monomères cités en (ia), (ib) et (ic) fait 100% en poids ;
(ii) au moins un agent de réticulation de type polyamine,
(iii) au moins une base aminée bi- ou polycyclique, et
(iv) au moins un sel de métal alcalin.

2. Composition de polymère vulcanisable selon la revendication 1, dans laquelle le sel de métal alcalin est choisi dans le groupe constitué par un sel de lithium, un sel de sodium, un sel de potassium et des mélanges de ceux-ci.

3. Composition de polymère vulcanisable selon la revendication 1, dans laquelle le sel de métal alcalin est le carbonate de lithium, le carbonate de sodium ou le carbonate de potassium.

4. Composition de polymère vulcanisable selon la revendication 1 comprenant, en tant que constituant (iii), au moins une base aminée bi- ou polycyclique qui est choisie dans le groupe constitué par le 1,8-diazabicyclo[5.4.0]undéc-7-ène (DBU), le 1,5-diazabicyclo[4.3.0]-5-nonène (DBN), le 1,4-diazabicyclo[2.2.2]-octane (DABCO), le 1,5,7-triazabicyclo[4.4.0]déc-5-ène (TBD), le 7-méthyl-1,5,7-triazabicyclo[4.4.0]déc-5-ène (MTBD) et ses dérivés.

5. Composition de polymère vulcanisable selon la revendication 1 comprenant
(i) un polymère de nitrile éventuellement hydrogéné dérivé de
(ia) au moins un diène conjugué,
(ib) au moins un nitrile α,β-insaturé, et
(ic) au moins un monomère monoester d'acide dicarboxylique insaturé à insaturation α,β-éthylénique, un monomère acide dicarboxylique insaturé à insaturation α,β-éthylénique, un monomère anhydride d'acide dicarboxylique insaturé à insaturation α,β-éthylénique ou diester d'acide dicarboxylique insaturé à insaturation α,β-éthylénique en tant que troisième monomère,
(ii) au moins un agent de réticulation de type polyamine,
(iii) au moins une base aminée bi- ou polycyclique, qui est en particulier choisie dans le groupe constitué par le 1,8-diazabicyclo[5.4.0]undéc-7-ène (DBU), le 1,5-diazabicyclo[4.3.0]-5-nonène (DBN), le 1,4-diazabicyclo[2.2.2]octane (DABCO), le 1,5,7-triazabicyclo[4.4.0]déc-5-ène (TBD), le 7-méthyl-1,5,7-triazabicyclo[4.4.0]déc-5-ène (MTBD) et ses dérivés,
(iv) au moins un sel de métal alcalin,
(v) éventuellement au moins un antioxydant, et
(vi) éventuellement au moins une charge.

6. Composition de polymère vulcanisable selon la revendication 5 dans laquelle le polymère de nitrile éventuellement hydrogéné est dérivé de
(ia) au moins un diène conjugué ayant un nombre d'atomes de carbone d'au moins 4, de préférence de 4 à 6 atomes de carbone, de façon plus préférée le 1,3-butadiène, l'isoprène, le 2,3-diméthyl-1,3-butadiène ou le 1,3-pentadiène, ou au moins un diène non conjugué ayant un nombre d'atomes de carbone dans la fourchette de 5 à 12, de façon plus préférée le 1,4-pentadiène ou le 1,4-hexadiène,
(ib) au moins un nitrile insaturé à insaturation α,β-éthylénique, de préférence l'acrylonitrile, un α-halo-génoacrylonitrile, de façon plus préférée l'α-chloro-acrylonitrile ou l'α-bromoacrylonitrile, ou un α-alkyl-acrylonitrile, de façon plus préférée le méthacrylo-nitrile ou l'éthacrylonitrile, et
(ic) au moins un monomère monoester d'acide dicarboxylique insaturé à insaturation α,β-éthylénique, un monomère acide dicarboxylique insaturé à insaturation α,β-éthylénique, un monomère anhydride d'acide dicarboxylique insaturé à insaturation α,β-éthylénique ou diester d'acide dicarboxylique insaturé à insaturation α,β-éthylénique en tant que troisième monomère (ic).

7. Composition de polymère vulcanisable selon la revendication 4 ou 5, dans laquelle le groupe ester du monomère monoester ou diester d'acide dicarboxylique insaturé à insaturation α,β-éthylénique comprend un groupe alkyle, un groupe cycloalkyle, un groupe alkyl-cycloalkyle ou un groupe aryle relié par l'intermédiaire d'un atome d'oxygène au groupe carbonyle, dans laquelle le nombre d'atomes de carbone du groupe alkyle est de préférence dans la fourchette de 1 à 10, de façon plus préférée de 2, 3, 4, 5 à 6, le nombre d'atomes de carbone du groupe cycloalkyle est de préférence dans la fourchette de 5 à 12, de façon plus préférée dans la fourchette de 6 à 10, le nombre d'atomes de carbone du groupe alkylcycloalkyle est de préférence dans la fourchette de 6 à 12, et de façon plus préférée dans la fourchette de 7 à 10.

8. Composition de polymère vulcanisable selon la revendication 1, dans laquelle au moins un des monomères suivants est utilisé comme monomère monoester d'acide dicarboxylique insaturé à insaturation α,β-éthylénique (ic) :
- esters monoalkyliques d'acide maléique, de préférence maléate de monométhyle, maléate de monoéthyle, maléate de monopropyle et maléate de mono-n-butyle ;
- esters monocycloalkyliques d'acide maléique, de préférence maléate de monocyclopentyle, maléate de mono-cyclohexyle et maléate de monocycloheptyle ;
- esters monoalkylcycloalkyliques d'acide maléique, de préférence maléate de monométhylcyclopentyle et maléate de monoéthylcyclohexyle ;
- ester monoarylique d'acide maléique, de préférence maléate de monophényle ;
- ester monobenzylique d'acide maléique, de préférence maléate de monobenzyle ;
- esters monoalkyliques d'acide fumarique, de préférence fumarate de monométhyle, fumarate de monoéthyle, fumarate de monopropyle et fumarate de mono-n-butyle ;
- esters monocycloalkyliques d'acide fumarique, de préférence fumarate de monocyclopentyle, fumarate de mono-cyclohexyle et fumarate de monocycloheptyle ;
- esters monoalkylcycloalkyliques d'acide fumarique, de préférence fumarate de monométhylcyclopentyle et fumarate de monoéthylcyclohexyle ;
- ester monoarylique d'acide fumarique, de préférence fumarate de monophényle ;
- ester monobenzylique d'acide fumarique, de préférence fumarate de monobenzyle ;
- esters monoalkyliques d'acide citraconique, de préférence citraconate de monométhyle, citraconate de monoéthyle, citraconate de monopropyle et citraconate de mono-n-butyle ;
- esters monocycloalkyliques d'acide citraconique, de préférence citraconate de monocyclopentyle, citraconate de monocyclohexyle et citraconate de monocycloheptyle ;
- esters monoalkylcycloalkyliques d'acide citraconique, de préférence citraconate de monométhylcyclopentyle et citraconate de monoéthylcyclohexyle ;
- ester monoarylique d'acide citraconique, de préférence citraconate de monophényle ;
- ester monobenzylique d'acide citraconique, de préférence citraconate de monobenzyle ;
- esters monoalkyliques d'acide itaconique, de préférence itaconate de monométhyle, itaconate de monoéthyle, itaconate de monopropyle et itaconate de mono-n-butyle ;
- esters monocycloalkyliques d'acide itaconique, de préférence itaconate de monocyclopentyle, itaconate de monocyclohexyle et itaconate de monocycloheptyle ;
- esters monoalkylcycloalkyliques d'acide itaconique, de préférence itaconate de monométhylcyclopentyle et itaconate de monoéthylcyclohexyle ;
- ester monoarylique d'acide itaconique, de préférence itaconate de monophényle ;
- ester monobenzylique d'acide itaconique, de préférence itaconate de monobenzyle ;
- ester monoalkylique d'acide mésaconique, de préférence ester monoéthylique d'acide mésaconique.

9. Composition de polymère vulcanisable selon la revendication 1, dans laquelle de l'acide maléique, de l'acide fumarique, de l'acide itaconique, de l'acide citraconique, de l'acide mésaconique ou des anhydrides d'acide maléique, d'acide fumarique, d'acide itaconique et d'acide citraconique sont utilisés en tant que troisième monomère (ic).

10. Composition de polymère vulcanisable selon la revendication 1, dans laquelle une polyamine aliphatique, de préférence l'hexaméthylènediamine, le carbamate d'hexaméthylènediamine, la tétraméthylènepentamine, un adduit hexaméthylènediamine-cinnamaldéhyde ou un sel hexaméthylènediamine-dibenzoate, une polyamine aromatique, de préférence le 2,2-bis(4-(4-aminophénoxy)phényl)propane, la 4,4'-méthylènedianiline, la m-phénylènediamine, la p-phénylènediamine ou la 4,4'-méthylène bis(o-chloroaniline) ou des composés possédant au moins deux structures hydrazide, de préférence le dihydrazide d'acide isophtalique, le dihydrazide d'acide adipique ou le dihydrazide d'acide sébacique, est utilisé comme agent de réticulation de type polyamine (ii).

11. Procédé de préparation d'une composition de polymère vulcanisable selon la revendication 1 comprenant le fait de mélanger le polymère (i) avec au moins un agent de réticulation de type polyamine (ii), au moins une base aminée bi- ou polycyclique (iii) et au moins un sel de métal alcalin (iv).

12. Procédé de préparation d'un vulcanisat de polymère par vulcanisation à une température élevée d'un polymère (i) possédant une chaîne principale de polymère comportant des motifs récurrents monomères dérivés de
(ia) au moins 25 % en poids à 99,9 % en poids, de préférence 25 à 89,5 % en poids, de façon plus préférée 30 à 80 % en poids, de façon particulièrement préférée 45 à 75 % en poids, par rapport au polymère, d'un premier monomère qui introduit au moins un carbone secondaire ou un carbone tertiaire dans la chaîne principale de polymère, de préférence au moins un monomère diénique, et
(ib) dans la fourchette de 0 à 74,9 % en poids, de préférence de 10 à 60% en poids, de façon plus préférée de 15 à 55% en poids, de façon particulièrement préférée de 20 à 50% en poids, par rapport au polymère, d'au moins un deuxième monomère, de préférence un monomère nitrile insaturé à insaturation α,β-éthylénique ;
(ic) dans la fourchette de 0,1 à 20% en poids, de préférence de 0,5 à 20 % en poids, de façon plus préférée de 1 à 15 % en poids, de façon particulièrement préférée de 1,5 à 10 % en poids, par rapport au polymère, d'au moins un monomère monoester d'acide dicarboxylique insaturé à insaturation α,β-éthylénique, un monomère acide dicarboxylique insaturé à insaturation α,β-éthy-lénique, un monomère anhydride d'acide dicarboxylique insaturé à insaturation α,β-éthylénique ou diester d'acide dicarboxylique insaturé à insaturation α,β-éthylénique en tant que troisième monomère, de préférence d'au moins un monomère monoester d'acide dicarboxylique insaturé à insaturation α,β-éthylénique ; dans lequel la somme de tous les motifs récurrents monomères cités en (ia), (ib) et (ic) fait 100% en poids, avec au moins un agent de réticulation de type polyamine (ii), au moins une base aminée bi- ou polycyclique (iii), de préférence choisie dans le groupe constitué par le 1,8-diazabicyclo[5.4.0]undéc-7-ène (DBU), le 1,5-diazabicyclo[4.3.0]-5-nonène (DBN), le 1,4-diazabicyclo[2.2.2]octane (DABCO), le 1,5,7-triazabicyclo[4.4.0]déc-5-ène (TBD), le 7-méthyl-1,5,7-triazabicyclo[4.4.0]déc-5-ène (MTBD) et ses dérivés, et au moins un sel de métal alcalin (iv).

13. Vulcanisat de polymère comprenant un polymère (i) possédant une chaîne principale de polymère dérivée de
(ia) au moins 25% en poids à 99,9 % en poids, de préférence 25 à 89,5 % en poids, de façon plus préférée 30 à 80% en poids, de façon particulièrement préférée 45 à 75% en poids, par rapport au polymère, d'un premier monomère qui introduit au moins un carbone secondaire ou un carbone tertiaire dans la chaîne principale de polymère, de préférence au moins un monomère diénique,
(ib) dans la fourchette de 0 à 74,9 % en poids, de préférence de 10 à 60% en poids, de façon plus préférée de 15 à 55% en poids, de façon particulièrement préférée de 20 à 50% en poids, par rapport au polymère, d'au moins un deuxième monomère, de préférence un monomère nitrile insaturé à insaturation α,β-éthylénique, et
(ic) dans la fourchette de 0,1 à 20% en poids, de préférence de 0,5 à 20% en poids, de façon plus préférée de 1 à 15% en poids, de façon particulièrement préférée de 1,5 à 10% en poids, par rapport au polymère, d'au moins un monomère monoester d'acide dicarboxylique insaturé à insaturation α,β-éthylénique, un monomère acide dicarboxylique insaturé à insaturation α,β-éthylénique, un monomère anhydride d'acide dicarboxylique insaturé à insaturation α,β-éthylénique ou diester d'acide dicarboxylique insaturé à insaturation α,β-éthylénique en tant que troisième monomère, de préférence au moins un monomère monoester d'acide dicarboxylique insaturé à insaturation α,β-éthylénique ;
dans lequel la somme de tous les motifs récurrents monomères cités en (ia), (ib) et (ic) fait 100% en poids, lequel polymère (i) contient des éléments de réticulation ou de pontage à base d'un agent de réticulation de type polyamine et dans lequel le vulcanisat de polymère comprend au moins une base aminée bi- ou polycyclique, de préférence choisie dans le groupe constitué par le 1,8-diazabicyclo[5.4.0]undéc-7-ène (DBU), le 1,5-diaza-bicyclo[4.3.0]-5-nonène (DBN), le 1,4-diazabicyclo-[2.2.2]octane (DABCO), le 1,5,7-triazabicyclo[4.4.0]-déc-5-ène (TBD), le 7-méthyl-1,5,7-triazabicyclo-[4.4.0]déc-5-ène (MTBD) et ses dérivés, et au moins un sel de métal alcalin (iv).

14. Vulcanisat de polymère selon la revendication 13 sous la forme d'un moulage ou d'une pièce façonnée.
